# EUROPEAN PATENT APPLICATION

(11) **EP 4 780 065 A1**
(43) Date of publication of application: **22.07.2026**
(21) Application number: 24867507.6
(22) Date of filing: 19.09.2024
(51) Int. Cl.: H04W 36/00

(54) **COMMUNICATION METHOD AND APPARATUS, AND READABLE STORAGE MEDIUM**

(30) Priority: 20.09.2023 CN 202311226045
(71) Applicant: HUAWEI TECHNOLOGIES CO., LTD., Shenzhen 518129 (CN)
(72) Inventor: ZHONG, Yaping, Shenzhen, Guangdong 518129 (CN); HU, Xingxing, Shenzhen, Guangdong 518129 (CN)
(74) Representative: Pfenning, Meinig & Partner mbB
(86) International application number: PCT/CN2024/119786
(87) International publication number: WO 2025/061101

(57) **Abstract**

This application provides a communication method and apparatus, and a readable storage medium, which may be applied to the field of communication technologies, and can overcome problems in a conventional handover method, for example, a problem of confusion/conflict of identification information of cells. The method includes: A first network device sends a handover request message to a plurality of candidate target cells, where the plurality of candidate target cells have same first identification information. The first network device receives handover request acknowledgment messages corresponding to the plurality of candidate target cells respectively, where each of the handover request acknowledgment messages includes characteristic information and a handover configuration of the candidate target cell. The first network device sends a first message to a terminal device, where the first message includes handover configurations and characteristic information that correspond to the plurality of candidate target cells respectively, and the characteristic information is used by the terminal device to select one of the plurality of candidate target cells as a target cell.

## Description

This application claims priority to Chinese Patent Application No. 202311226045.6, filed with the China National Intellectual Property Administration on September 20, 2023 and entitled "COMMUNICATION METHOD AND APPARATUS, AND READABLE STORAGE MEDIUM", which is incorporated herein by reference in its entirety.

### TECHNICAL FIELD

This application relates to the field of communication technologies, and in particular, to a communication method and apparatus, and a readable storage medium.

### BACKGROUND

To provide reliable communication services for areas that are difficult to be covered by terrestrial networks (terrestrial network, TN), such as oceans or forests, non-terrestrial communication (non-terrestrial network, NTN) can be introduced into 5th generation (5th-Generation, 5G) mobile networks.

In mobile communication systems, user equipment (user equipment, UE) in a connected state may be handed over from an originally accessed source cell to a target cell by using a handover procedure. However, if the conventional handover procedure is applied between the NTN network and the TN network, many problems arise.

### SUMMARY

Embodiments of this application provide a communication method and apparatus, and a readable storage medium, to overcome a problem existing in a conventional handover procedure.

To achieve the foregoing objective, the following technical solutions are used in embodiments of this application.

According to a first aspect, a communication method is provided. The method may be performed by a first network device, or may be performed by a module (for example, a processor, a chip, or a chip system) used in the first network device. The following uses an example in which the first network device performs the method for description. The method includes: A first network device sends a handover request message to a plurality of candidate target cells, where the plurality of candidate target cells have same first identification information. The first network device receives handover request acknowledgment messages corresponding to the plurality of candidate target cells respectively, where each handover request acknowledgment message includes characteristic information and a handover configuration of the candidate target cell. The first network device sends a first message to a terminal device, where the first message includes handover configurations and characteristic information that correspond to the plurality of candidate target cells respectively, and the characteristic information is used by the terminal device to select one of the plurality of candidate target cells as a target cell.

Based on the communication method provided in this embodiment of this application, when the plurality of candidate target cells have the same first identification information, that is, confusion of the first identification information occurs, the terminal device may determine the target cell based on the characteristic information of the candidate target cell, and therefore may be successfully handed over to the target cell.

With reference to the first aspect, in a possible design, the handover request message includes first indication information, and the first indication information indicates the candidate target cell to feed back the characteristic information.

This solution provides a manner of triggering the candidate target cell to feed back the characteristic information.

With reference to the first aspect, in a possible design, the first message includes second indication information, and the second indication information indicates the terminal device to determine the target cell from the plurality of candidate target cells.

Based on this solution, the terminal device may determine, based on the second indication information, that the target cell needs to be autonomously determined.

With reference to the first aspect, in a possible design, the characteristic information is second identification information or area information, and the second identification information is used to uniquely identify a cell.

This solution provides two types of characteristic information that are not confused with that of another cell and that may be used to uniquely determine the target cell.

With reference to the first aspect, in a possible design, the method further includes: The first network device receives a measurement report from the terminal device, where the measurement report includes the first identification information of the plurality of candidate target cells.

Based on this solution, the first network device may obtain, by using a measurement procedure, first identification information of a cell measured by the terminal device. A measured cell may be determined by the first network device as the target cell, to obtain the first identification information of the target cell, that is, the first identification information of the plurality of candidate target cells.

With reference to the first aspect, in a possible design, the plurality of candidate target cells have a same frequency.

The communication method provided in this application may be used to determine the target cell from the plurality of candidate target cells having the same frequency and the same first identification information, that is, may be used to resolve a problem of confusion of the first identification information and the frequency.

According to a second aspect, a communication method is provided. The method may be performed by a terminal device, or may be performed by a module (for example, a processor, a chip, or a chip system) used in the terminal device. The following uses an example in which the terminal device performs the method for description. The method includes: The terminal device receives a first message from a first network device, where the first message includes handover configurations and characteristic information that correspond to a plurality of candidate target cells respectively, and the plurality of candidate target cells have same first identification information. The terminal device selects one of the plurality of candidate target cells as a target cell based on the characteristic information. The terminal device applies a handover configuration of the target cell to perform handover to the target cell.

Based on the communication method provided in this embodiment of this application, when the plurality of candidate target cells have the same first identification information, that is, confusion of the first identification information occurs, the terminal device may determine the target cell based on the characteristic information of the candidate target cell, and therefore may be successfully handed over to the target cell.

With reference to the second aspect, in a possible design, the characteristic information includes second identification information or area information, and the second identification information is used to uniquely identify a cell; and second identification information of the target cell is the same as second identification information of any measured cell, or a terminal device is located in an area indicated by area information corresponding to the target cell.

This solution provides two types of characteristic information that are not confused with that of another cell and that may be used to uniquely determine the target cell. When the characteristic information is second identification information, if second identification information of a candidate target cell is the same as second identification information of a cell measured by the terminal device, it may be considered that the candidate target cell is the target cell. When the characteristic information is area information, if the terminal device is located in an area indicated by area information corresponding to a candidate target cell, it may be considered that the candidate target cell is the target cell.

With reference to the second aspect, in a possible design, when the characteristic information includes the second identification information, the method further includes: The terminal device measures second identification information of one or more cells. The terminal device compares second identification information of each of the plurality of candidate target cells with the second identification information of the measured cell.

When the characteristic information includes the second identification information, the terminal device may measure a neighboring cell to read second identification information of the neighboring cell, and compare the second identification information of the neighboring cell with the second identification information of the candidate target cell, to determine the target cell.

With reference to the second aspect, in a possible design, the method further includes: The terminal device sends a measurement report to the first network device, where the measurement report includes first identification information of the target cell, and the first identification information of the target cell is the same as the first identification information of the plurality of candidate target cells.

Based on this solution, the terminal device may report, by using a measurement procedure, first identification information of a measured cell to the first network device. A measured cell may be determined by the first network device as the target cell, to obtain the first identification information of the target cell, that is, the first identification information of the plurality of candidate target cells.

With reference to the second aspect, in a possible design, the method further includes: The terminal device retains, in the first message, handover configurations of candidate target cells other than the target cell.

In this solution, the retained handover configuration of the another candidate target cell may be used for a subsequent handover procedure, so that signaling overheads can be reduced.

With reference to the second aspect, in a possible design, the first message further includes second indication information, and the second indication information indicates the terminal device to determine the target cell from the plurality of candidate target cells.

Based on this solution, the terminal device may determine, based on the second indication information, that the target cell needs to be autonomously determined.

With reference to the second aspect, in a possible design, the plurality of candidate target cells have a same frequency.

The communication method provided in this application may be used to determine the target cell from the plurality of candidate target cells having the same frequency and the same first identification information, that is, may be used to resolve a problem of confusion of the first identification information and the frequency.

According to a third aspect, a communication method is provided. The method may be performed by a first network device, or may be performed by a module (for example, a processor, a chip, or a chip system) used in the first network device. The following uses an example in which the first network device performs the method for description. The method includes: The first network device sends a handover request message to a plurality of candidate target cells, where the plurality of candidate target cells have same first identification information, the handover request message includes location information associated with a terminal device, and the location information associated with the terminal device is used by the candidate target cell to perform admission control on the terminal device. The first network device receives a handover request acknowledgment message corresponding to a target cell, where the handover acknowledgment message includes a handover configuration corresponding to the target cell, and the target cell is a candidate target cell that successfully performs admission control on the terminal device in the plurality of candidate target cells. The first network device sends a first message to the terminal device, where the first message includes the handover configuration corresponding to the target cell, and the first message is used by the terminal device to perform handover to the target cell.

Based on the communication method provided in this embodiment of this application, when the plurality of candidate target cells have the same first identification information, that is, confusion of the first identification information occurs, the candidate target cell may perform admission control based on the location information associated with the terminal device. If the candidate target cell successfully performs the admission control, it may be considered that the candidate target cell is the target cell, and the terminal device may be handed over to the candidate target cell.

With reference to the third aspect, in a possible design, that the admission control succeeds includes: determining that the terminal device is located in a coverage area of the candidate target cell; and that the admission control fails includes: determining that the terminal device is not located in a coverage area of the candidate target cell.

Based on this solution, the candidate target cell may perform the admission control on the terminal device by determining whether the terminal device is located in the coverage area of the candidate target cell. If the terminal device is not located in the coverage area of the candidate target cell, it indicates that the candidate target cell is not a neighboring cell that can be measured by the terminal device. Therefore, the candidate target cell is not the target cell. On the contrary, if the terminal device is located in the coverage area of the candidate target cell, it indicates that the candidate target cell is a neighboring cell that can be measured by the terminal device, and the terminal device may access the candidate target cell. Therefore, the candidate target cell may be considered as the target cell.

With reference to the third aspect, in a possible design, the location information associated with the terminal device includes at least one of the following: area information of a beam in which the terminal device is located, location information of the terminal device, and information about a geographical area in which the terminal device is located.

This solution provides a plurality of possible types of location information associated with the terminal device, and the information may represent a current location of the terminal device.

With reference to the third aspect, in a possible design, the method further includes: The first network device receives a measurement report from the terminal device, where the measurement report includes the first identification information of the plurality of candidate target cells.

Based on this solution, the first network device may obtain, by using a measurement procedure, first identification information of a cell measured by the terminal device. A measured cell may be determined by the first network device as the target cell, to obtain the first identification information of the target cell, that is, the first identification information of the plurality of candidate target cells.

With reference to the third aspect, in a possible design, the plurality of candidate target cells have a same frequency.

The communication method provided in this application may be used to determine the target cell from the plurality of candidate target cells having the same frequency and the same first identification information, that is, may be used to resolve a problem of confusion of the first identification information and the frequency.

According to a fourth aspect, a communication method is provided. The method may be performed by a network device corresponding to a candidate target cell, or may be performed by a module (for example, a processor, a chip, or a chip system) used in the network device corresponding to the candidate target cell. The following uses an example in which the network device corresponding to the candidate target cell performs the method for description. The method includes: The network device corresponding to the candidate target cell receives a handover request message from a first network device, where the handover request message includes location information associated with a terminal device. The network device corresponding to the candidate target cell performs admission control on the terminal device based on the location information associated with the terminal device.

Based on the communication method provided in this embodiment of this application, the candidate target cell may perform admission control based on the location information associated with the terminal device. If the candidate target cell successfully performs the admission control, it may be considered that the candidate target cell is a target cell, and the terminal device may be handed over to the candidate target cell.

With reference to the fourth aspect, in a possible design, that the network device corresponding to the candidate target cell performs the admission control on the terminal device includes: determining that the terminal device is located in a coverage area, and successfully performing the admission control; or determining that the terminal device is not located in a coverage area, and failing to perform the admission control.

Based on this solution, the candidate target cell may perform the admission control on the terminal device by determining whether the terminal device is located in the coverage area of the candidate target cell. If the terminal device is not located in the coverage area of the candidate target cell, it indicates that the candidate target cell is not a neighboring cell that can be measured by the terminal device. Therefore, the candidate target cell is not the target cell. On the contrary, if the terminal device is located in the coverage area of the candidate target cell, it indicates that the candidate target cell is a neighboring cell that can be measured by the terminal device, and the terminal device may access the candidate target cell. Therefore, the candidate target cell may be considered as the target cell.

With reference to the fourth aspect, in a possible design, after the admission control is successfully performed, the method further includes: The network device corresponding to the candidate target cell sends a handover request acknowledgment message to the first network device, where the handover acknowledgment message includes a handover configuration.

Based on this solution, that the admission control is successfully performed indicates that the candidate target cell is the target cell, and the network device corresponding to the candidate target cell may feed back the handover request acknowledgment message to notify the first network device.

With reference to the fourth aspect, in a possible design, the admission control fails, and the method further includes: The network device corresponding to the candidate target cell sends a handover reject message to the first network device.

Based on this solution, that the admission control fails indicates that the candidate target cell is not the target cell, and the network device corresponding to the candidate target cell may feed back the handover request reject message to notify the first network device.

With reference to the fourth aspect, in a possible design, the location information associated with the terminal device includes at least one of the following: area information of a beam in which the terminal device is located, location information of the terminal device, and information about a geographical area in which the terminal device is located.

This solution provides a plurality of possible types of location information associated with the terminal device, and the information may represent a current location of the terminal device.

According to a fifth aspect, a communication method is provided. The method may be performed by a first network device, or may be performed by a module (for example, a processor, a chip, or a chip system) used in the first network device. The following uses an example in which the first network device performs the method for description. The method includes: The first network device obtains location information associated with a terminal device and respective area information of a plurality of candidate target cells, where the plurality of candidate target cells have same first identification information. The first network device determines a target cell based on the location information associated with the terminal device and the respective area information of the plurality of candidate target cells, where the target cell belongs to the plurality of candidate target cells, and the terminal device is located in a coverage area of the target cell. The first network device sends a first message to the terminal device, where the first message includes a handover configuration of the target cell, and the first message is used by the terminal device to perform handover to the target cell.

Based on the communication method provided in this embodiment of this application, when the plurality of candidate target cells have the same first identification information, that is, confusion of the first identification information occurs, the first network device may determine the target cell based on the location information associated with the terminal device and the respective area information of the plurality of candidate target cells. In other words, a problem of confusion of the first identification information can be resolved.

With reference to the fifth aspect, in a possible design, that the first network device obtains the respective area information of the plurality of candidate target cells includes: The first network device receives the area information of the plurality of candidate target cells; the first network device obtains the respective area information of the plurality of candidate target cells from network devices corresponding to the plurality of candidate target cells respectively; or the first network device obtains the respective area information of the plurality of candidate target cells from a network management network element.

This solution provides a plurality of manners of obtaining the area information of the candidate target cell.

With reference to the fifth aspect, in a possible design, that the first network device obtains the location information associated with the terminal device and the respective area information of the plurality of candidate target cells includes: The first network device obtains a neighboring cell relationship, where the neighboring cell relationship includes first identification information and second identification information of the candidate target cell, and first location information, and the first location information includes area information of the candidate target cell and location information of a terminal device located in a coverage area of the candidate target cell.

Based on this solution, the first network device may obtain the neighboring cell relationship to obtain the location information associated with the terminal device and the area information of the candidate target cell.

With reference to the fifth aspect, in a possible design, that the first network device obtains the neighboring cell relationship includes: The first network device receives the first identification information and the second identification information of the candidate target cell that are reported by the terminal device, and the location information of the terminal device in the measured candidate target cell; the first network device receives handover acknowledgment information corresponding to the candidate target cell, where the handover acknowledgment information includes the area information, the first identification information, and/or the second identification information of the candidate target cell; or the first network device receives the neighboring cell relationship from a second network device.

This solution provides a plurality of manners of obtaining the neighboring cell relationship.

With reference to the fifth aspect, in a possible design, the method further includes: The first network device sends the neighboring cell relationship to a third network device.

Based on this solution, the neighboring cell relationship may be transferred between network devices.

With reference to the fifth aspect, in a possible design, the location information associated with the terminal device includes at least one of the following: area information of a beam in which the terminal device is located, location information of the terminal device, and information about a geographical area in which the terminal device is located.

This solution provides a plurality of possible types of location information associated with the terminal device, and the information may represent a current location of the terminal device.

With reference to the fifth aspect, in a possible design, the method further includes: The first network device receives a measurement report from the terminal device, where the measurement report includes the first identification information of the plurality of candidate target cells.

Based on this solution, the first network device may obtain, by using a measurement procedure, first identification information of a cell measured by the terminal device. A measured cell may be determined by the first network device as the target cell, to obtain the first identification information of the target cell, that is, the first identification information of the plurality of candidate target cells.

With reference to the fifth aspect, in a possible design, the plurality of candidate target cells have a same frequency.

The communication method provided in this application may be used to determine the target cell from the plurality of candidate target cells having the same frequency and the same first identification information, that is, may be used to resolve a problem of confusion of the first identification information and the frequency.

According to a sixth aspect, a communication method is provided. The method may be performed by a core network device, or may be performed by a module (for example, a processor, a chip, or a chip system) used in the core network device. The following uses an example in which the core network device performs the method for description. The method includes: The core network device receives cell information from a fourth network device, where the cell information includes information about a serving cell of the fourth network device and information about a neighboring cell of the serving cell, the information about the serving cell includes first identification information and second identification information of the serving cell, the information about the neighboring cell includes second identification information of the neighboring cell, the first identification information is used to identify one or more cells, and the second identification information is used to uniquely identify a cell. The core network device receives a handover request message from a fifth network device, where the handover request message includes first identification information of a target cell to which a terminal device requests handover and second identification information of a cell measured by the terminal device, and the handover request message is used to request the target cell to prepare a handover resource. The core network device determines, based on the cell information and the handover request message, that the first identification information of the target cell is the same as the first identification information of the serving cell, and the second identification information of the cell measured by the terminal device is the same as the second identification information of the serving cell or the neighboring cell. The core network device sends a second message to the fourth network device, where the second message is used to request the target cell to prepare the handover resource.

Based on the communication method provided in this embodiment of this application, the core network device may obtain the cell information, where the cell information includes the information about the serving cell and the information about the neighboring cell of the serving cell. In addition, the core network device may determine, based on the cell information, whether a serving cell of a network device is the target cell. This resolves a problem that in a scenario in which a network device has no neighboring cell relationship, the network device cannot determine the target cell and therefore cannot complete cell handover.

With reference to the sixth aspect, in a possible design, the handover request message further includes identification information of a sixth network device; and the method further includes: The core network device ignores the identification information of the sixth network device.

In a conventional handover procedure, if a handover request message received by a core network device includes identification information of a network device, the core network device may use the network device as a network device corresponding to a target cell. However, based on this solution, if the handover request message further includes identification information of a network device, the core network device may ignore the identification information of the network device, and still determine the target cell based on the cell information.

With reference to the sixth aspect, in a possible design, the information about the serving cell further includes at least one of frequency information of the serving cell, first identification information of the neighboring cell, and frequency information of the neighboring cell.

Based on this solution, the core network device may further obtain at least one of the frequency information of the serving cell, the first identification information of the neighboring cell, and the frequency information of the neighboring cell. The information may be used to assist the core network device in determining the target cell.

With reference to the sixth aspect, in a possible design, a frequency of the serving cell is the same as a frequency of the target cell.

Based on this solution, the core network device may further determine whether the frequency of the serving cell is the same as the frequency of the target cell. When the frequencies are the same, it can be considered that the serving cell is the target cell only. When the frequencies are not the same, it is considered that the serving cell is not the target cell.

According to a seventh aspect, a communication method is provided. The method may be performed by a core network device, or may be performed by a module (for example, a processor, a chip, or a chip system) used in the core network device. The following uses an example in which the core network device performs the method for description. The method includes: The core network device receives cell information from a seventh network device, where the cell information includes first identification information and area information of a serving cell of the seventh network device. The core network device receives a handover request message from an eighth network device, where the handover request message includes first identification information of a target cell to which a terminal device requests handover. The core network device determines, based on the cell information and location information of the terminal device, that the first identification information of the serving cell is the same as the first identification information of the target cell and the terminal device is located in a coverage area of the serving cell. The core network device sends a second message to the seventh network device, where the second message is used to request the target cell to prepare a handover resource.

Based on the communication method provided in this embodiment of this application, the core network device may obtain the cell information, where the cell information includes the first identification information and the area information of the serving cell. In addition, the core network device may determine, based on the cell information, whether a serving cell of a network device is the target cell. This resolves a problem that in a scenario in which a network device has no neighboring cell relationship, the network device cannot determine the target cell and therefore cannot complete cell handover.

With reference to the seventh aspect, in a possible design, the handover request message further includes identification information of a ninth network device; and the method further includes: The core network device ignores the identification information of the ninth network device.

In a conventional handover procedure, if a handover request message received by a core network device includes identification information of a network device, the core network device may use the network device as a network device corresponding to a target cell. However, based on this solution, if the handover request message further includes identification information of a network device, the core network device may ignore the identification information of the network device, and still determine the target cell based on the cell information.

With reference to the seventh aspect, in a possible design, that the core network device obtains the location information of the terminal device includes: The core network device receives the location information of the terminal device from the terminal device. Alternatively, the handover request message includes the location information of the terminal device.

Based on this solution, a plurality of manners in which the core network device obtains the location information of the terminal device are provided.

With reference to the seventh aspect, in a possible design, the cell information further includes at least one of frequency information of the serving cell, first identification information of a neighboring cell of the serving cell, second identification information of the neighboring cell, and frequency information of the neighboring cell.

Based on this solution, the core network device may further obtain at least one of the frequency information of the serving cell, the first identification information of the neighboring cell, the second identification information of the neighboring cell, and the frequency information of the neighboring cell. The information may be used to assist the core network device in determining the target cell.

With reference to the seventh aspect, in a possible design, a frequency of the serving cell is the same as a frequency of the target cell.

Based on this solution, the core network device may further determine whether the frequency of the serving cell is the same as the frequency of the target cell. When the frequencies are the same, it can be considered that the serving cell is the target cell only. When the frequencies are not the same, it is considered that the serving cell is not the target cell.

According to an eighth aspect, a communication method is provided. The method may be performed by a first network device, or may be performed by a module (for example, a processor, a chip, or a chip system) used in the first network device. The following uses an example in which the first network device performs the method for description. The method includes: The first network device sends a third message to a terminal device, where the third message includes one or more measurement gap GAP configurations. The first network device receives third indication information from the terminal device, where the third indication information indicates to activate or deactivate one or more of one or more GAPs included in the third message.

Based on the communication method provided in this embodiment of this application, the first network device and the terminal device may align a deactivated/activated GAP, to increase a data transmission amount and reduce GAP scheduling overheads.

With reference to the eighth aspect, in a possible design, the third message further includes information about one or more frequencies associated with the one or more GAP configurations, and the one or more frequencies are frequencies configured for the terminal device to perform measurement.

With reference to the eighth aspect, in a possible design, the method further includes: The first network device sends information about an area associated with the frequency to the terminal device, where the information about the area associated with the frequency is used by the terminal device to determine, based on whether the terminal device is located in the area associated with the frequency, a frequency to be measured and/or a frequency not to be measured, a GAP associated with the frequency not to be measured is a GAP that the third message indicates to deactivate, and a GAP associated with the frequency to be measured is a GAP that the third message indicates to activate.

Based on this solution, the terminal device may determine, based on the area associated with the frequency, whether to measure the frequency, to further determine whether to deactivate a GAP associated with the frequency.

With reference to the eighth aspect, in a possible design, the method further includes:
The first network device sends fourth indication information to the terminal device, where the fourth indication information indicates the terminal device to determine, based on the information about the area associated with the frequency, whether to measure the frequency.

Based on this solution, the terminal device may determine, based on an indication of the fourth indication information, that the terminal device needs to determine, based on the information about the area associated with the frequency, whether to measure the frequency.

With reference to the eighth aspect, in a possible design, the third indication information is carried in a medium access control control element MAC CE or a radio resource control RRC message.

This solution provides a plurality of types of signaling that may carry the third indication information.

According to a ninth aspect, a communication method is provided. The method may be performed by a terminal device, or may be performed by a module (for example, a processor, a chip, or a chip system) used in the terminal device. The following uses an example in which the terminal device performs the method for description. The method includes: The terminal device receives a third message from a first network device, where the third message includes one or more measurement gap GAP configurations. The terminal device sends third indication information to the first network device, where the third indication information indicates to activate or deactivate one or more of one or more GAPs included in the third message.

Based on the communication method provided in this embodiment of this application, the first network device and the terminal device may align a deactivated/activated GAP, to increase a data transmission amount and reduce GAP scheduling overheads.

With reference to the ninth aspect, in a possible design, a second message further includes information about one or more frequencies associated with the one or more GAP configurations, and the one or more frequencies are frequencies configured for the terminal device to perform measurement.

With reference to the ninth aspect, in a possible design, the method further includes: The terminal device obtains information about an area associated with the frequency. The terminal device determines, based on the information about the area associated with the frequency, whether the terminal device is located in the area associated with the frequency, and if the terminal device is located in the area associated with the frequency, determines to measure the frequency, or if the terminal device is not located in the area associated with the frequency, determines not to measure the frequency, where a GAP associated with the frequency not to be measured is a GAP that the third message indicates to deactivate, and a GAP associated with the frequency to be measured is a GAP that the third message indicates to activate.

Based on this solution, the terminal device may obtain the information about the area associated with the frequency, and determine, based on the area associated with the frequency, whether to measure the frequency, to further determine whether to deactivate a GAP associated with the frequency.

With reference to the ninth aspect, in a possible design, the method further includes: The terminal device receives fourth indication information from the first network device, where the fourth indication information indicates the terminal device to determine, based on the information about the area associated with the frequency, whether to measure the frequency.

Based on this solution, the terminal device may determine, based on an indication of the fourth indication information, that the terminal device needs to determine, based on the information about the area associated with the frequency, whether to measure the frequency.

With reference to the ninth aspect, in a possible design, the third indication information is carried in a medium access control control element MAC CE or a radio resource control RRC message.

This solution provides a plurality of types of signaling that may carry the third indication information.

According to a tenth aspect, a communication apparatus is provided, to implement various methods. The communication apparatus includes a corresponding module, unit, or means (means) for implementing the methods. The module, unit, or means may be implemented by hardware, software, or hardware executing corresponding software. The hardware or the software includes one or more modules or units corresponding to a function.

In some possible designs, the communication apparatus may include a processing module and a transceiver module. The processing module may be configured to implement a processing function in any one of the foregoing aspects and the possible implementations of the foregoing aspects. The transceiver module may include a receiving module and a sending module that are respectively configured to implement a receiving function and a sending function in any one of the foregoing aspects and the possible implementations of the foregoing aspects.

In some possible designs, the transceiver module may include a transceiver circuit, a transceiver machine, a transceiver, or a communication interface.

According to an eleventh aspect, a communication apparatus is provided, including a processor and a memory. The memory is configured to store computer instructions. When the processor executes the instructions, the communication apparatus is enabled to perform the method in any one of the foregoing aspects.

According to a twelfth aspect, a communication apparatus is provided, including a processor and a communication interface. The communication interface is configured to communicate with a module outside the communication apparatus, and the processor is configured to execute a computer program or instructions, to enable the communication apparatus to perform the method in any one of the foregoing aspects.

According to a thirteenth aspect, a communication apparatus is provided, including at least one processor. The processor is configured to execute a computer program or instructions stored in a memory, to enable the communication apparatus to perform the method in any one of the foregoing aspects. The memory may be coupled to the processor, or may be independent of the processor.

According to a fourteenth aspect, a computer-readable storage medium is provided. The computer-readable storage medium stores a computer program or instructions. When the computer program or instructions are run on a communication apparatus, the communication apparatus is enabled to perform the method in any one of the foregoing aspects.

According to a fifteenth aspect, a computer program product including instructions is provided. When the instructions are run on a communication apparatus, the communication apparatus is enabled to perform the method in any one of the foregoing aspects.

According to a sixteenth aspect, a communication apparatus (for example, the communication apparatus may be a chip or a chip system) is provided. The communication apparatus includes a processor, configured to implement a function in any one of the foregoing aspects.

In some possible designs, the communication apparatus includes a memory, and the memory is configured to store necessary program instructions and data.

In some possible designs, when the apparatus is a chip system, the apparatus may include a chip, or may include a chip and another discrete component.

The communication apparatus provided in any one of the tenth aspect to the sixteenth aspect may be the first network device in the first aspect, the third aspect, the fifth aspect, or the eighth aspect, or an apparatus included in the first network device, for example, a chip or a chip system. Alternatively, the communication apparatus may be the terminal device in the second aspect or the ninth aspect, or an apparatus included in the terminal device, for example, a chip or a chip system. Alternatively, the communication apparatus may be the network device corresponding to the candidate target cell in the fourth aspect, or an apparatus included in the network device corresponding to the candidate target cell, for example, a chip or a chip system. Alternatively, the communication apparatus may be the core network device in the sixth aspect or the seventh aspect, or an apparatus included in the core network device, for example, a chip or a chip system.

It may be understood that, when the communication apparatus provided in any one of the tenth aspect to the sixteenth aspect is a chip, a sending action/function of the communication apparatus may be understood as outputting information, and a receiving action/function of the communication apparatus may be understood as inputting information.

For technical effects brought by any one of the designs of the tenth aspect to the sixteenth aspect, refer to the technical effects brought by different designs of the first aspect to the ninth aspect. Details are not described herein again.

According to a seventeenth aspect, a communication system is provided. The communication system includes a first network device and a terminal device. The first network device is configured to implement the method in the first aspect, and the terminal device is configured to implement the method in the second aspect. Alternatively, the communication system includes a first network device and a network device corresponding to a candidate target cell. The first network device is configured to implement the method in the third aspect, and the network device corresponding to the candidate target cell is configured to implement the method in the fourth aspect. Alternatively, the communication system includes a first network device and a terminal device. The first network device is configured to implement the method in the eighth aspect, and the terminal device is configured to implement the method in the ninth aspect.

### BRIEF DESCRIPTION OF DRAWINGS

FIG. 1 is a diagram of a RAN architecture based on an NTN network;
FIG. 2 is a diagram of a cell handover procedure;
FIG. 3 is a diagram of an NTN cell having a plurality of neighboring cells;
FIG. 4 is a diagram of a structure of a communication system according to an embodiment of this application;
FIG. 5 is an interaction diagram of a first communication method according to an embodiment of this application;
FIG. 6 is a schematic flowchart of a first communication method according to an embodiment of this application;
FIG. 7 is an interaction diagram of a second communication method according to an embodiment of this application;
FIG. 8 is a schematic flowchart of a second communication method according to an embodiment of this application;
FIG. 9 is an interaction diagram of a third communication method according to an embodiment of this application;
FIG. 10 is an interaction diagram of a fourth communication method according to an embodiment of this application;
FIG. 11 is an interaction diagram of a fifth communication method according to an embodiment of this application;
FIG. 12 is a diagram of an application scenario according to an embodiment of this application;
FIG. 13 is a schematic flowchart of a fifth communication method according to an embodiment of this application;
FIG. 14 is an interaction diagram of a sixth communication method according to an embodiment of this application;
FIG. 15 is an interaction diagram of a seventh communication method according to an embodiment of this application;
FIG. 16 is a diagram of a plurality of frequencies and a plurality of associated areas according to an embodiment of this application;
FIG. 17 is a diagram of a communication apparatus according to an embodiment of this application; and
FIG. 18 is a diagram of another communication apparatus according to an embodiment of this application.

### DESCRIPTION OF EMBODIMENTS

For ease of understanding of the technical solutions in embodiments of this application, the following first briefly describes technologies related to this application.

### 1. NTN network:

The NTN network has advantages of wide coverage, a long communication distance, high reliability, high flexibility, and a high throughput. Non-terrestrial communication is introduced into 5G, to provide a communication service for an area that is difficult to be covered by a terrestrial network, such as an ocean or a forest, thereby enhancing reliability of 5G communication, and also provide more data transmission resources and support more connections.

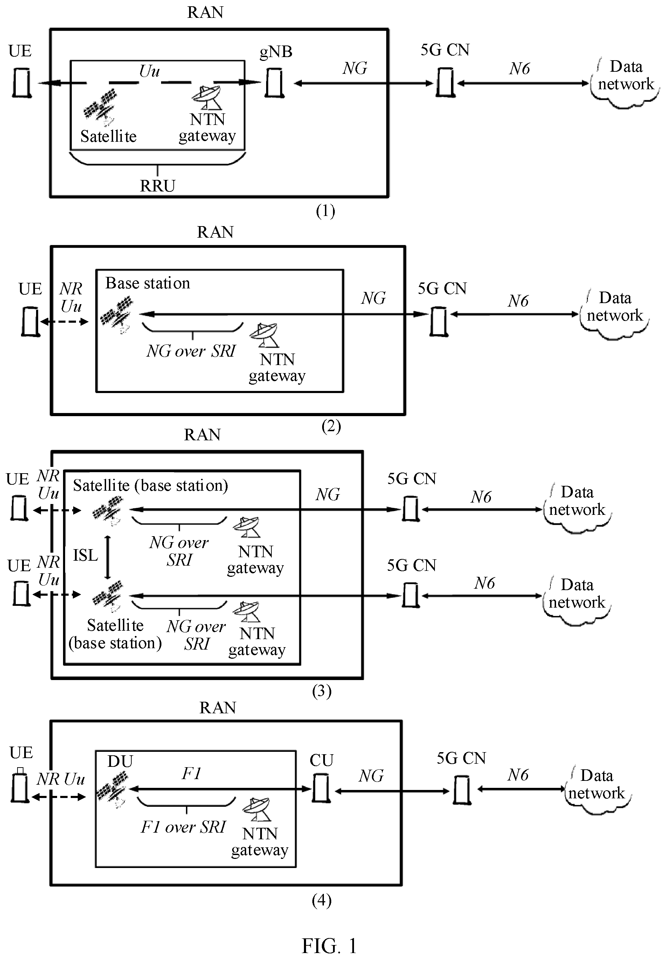

Currently, a plurality of NTN-based radio access network (radio access network, RAN) architectures are proposed, and the plurality of RAN architectures may be applied to a 5G or new radio (new radio, NR) system. The following separately provides descriptions with reference to FIG. 1.

An architecture 1 is shown in (1) in FIG. 1, and is also referred to as an architecture with transparent satellite (architecture with transparent satellite). In the architecture 1, a base station communicates with UE through a Uu interface, and a satellite and an NTN gateway (gateway) may serve as a remote radio unit (remote radio unit, RRU) of the base station. Functions of the satellite are radio frequency filtering (radio frequency filtering), and frequency conversion and amplification (Frequency conversion and amplification). That is, the satellite is mainly responsible for regenerating a physical layer signal, and does not have another higher protocol layer.

An architecture 2 is shown in (2) in FIG. 1. A satellite is a regenerative satellite without an inter-satellite link (inter-satellite link, ISL), and has a processing function of a base station. In other words, in this architecture, the satellite serves as the base station. In the architecture 2, the satellite may exchange routing information (send routing information, SRI) with an NTN gateway through an NG interface (NG over SRI). The satellite may communicate with a core network through the NG interface. The satellite may communicate with a terminal device through a Uu interface.

An architecture 3 is shown in (3) in FIG. 1. A satellite is a regenerative satellite with an inter-satellite link, and has a processing function of a base station. In other words, in this architecture, the satellite also serves as the base station. Different satellites may communicate with each other through the inter-satellite link. The satellite may exchange routing information with an NTN gateway through an NG interface. The satellite may communicate with a core network through the NG interface. The satellite may communicate with a terminal device through a Uu interface.

An architecture 4 is shown in (4) in FIG. 1. A satellite is a regenerative satellite having a processing function of a distribution unit (distributed unit, DU) in a base station. In other words, in this architecture, the satellite serves as the DU. The satellite may communicate with a central unit (central unit, CU) in the base station through an F1 interface. The satellite may exchange routing information with an NTN gateway through the FI interface (F1 over SRI). The CU in the base station may communicate with a core network through an NG interface. The satellite may communicate with a terminal device through a Uu interface.

An architecture 5 is not shown in FIG. 1. In the architecture 5, a satellite is a base station having an integrated access and backhaul (integrated access and backhaul, IAB) function.

Optionally, as shown in FIG. 1, the core network may be connected to a data network through an N6 interface.

### 2. Cell handover:

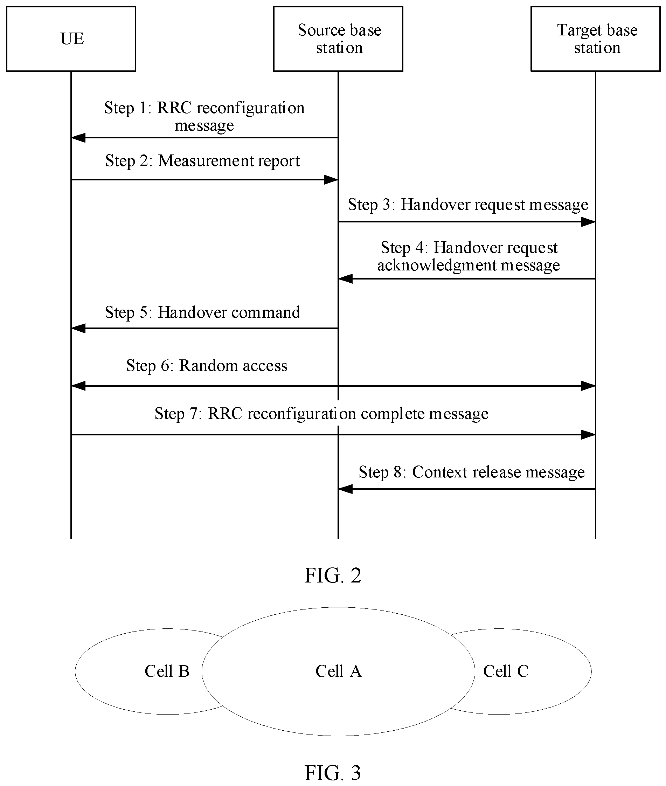

In a mobile communication system, UE in a connected state may be handed over from an originally accessed source cell to a target cell by using a handover procedure. In a conventional handover procedure, mobility management of the UE in the connected state is controlled by a base station. To be specific, the base station sends a handover message to indicate a specific cell to which the UE is handed over and how to perform handover. As shown in FIG. 2, an Xn interface-based handover procedure includes the following steps.

Step 1: A source base station (which is a serving base station of a source cell currently accessed by UE) sends a radio resource control (Radio Resource Control, RRC) reconfiguration message to the UE in a connected state, where the RRC reconfiguration message includes information such as a measurement object, a report configuration, and a measurement identifier. The measurement object indicates a to-be-measured frequency. For example, the to-be-measured frequency may be a frequency of a to-be-measured cell. The to-be-measured cell is usually a neighboring cell of the source cell currently accessed by the UE. The source base station may indicate one or more to-be-measured frequencies by using the RRC reconfiguration message. The report configuration is used to configure an event that needs to be met by the UE to report a measured cell in a measurement report. The measurement identifier is used to bind the measurement object to the report configuration. The information used by the UE to perform measurement may also be referred to as a measurement configuration or measurement control. In other words, step 1 may also be considered as that the source base station delivers the measurement configuration/measurement control.

Step 2: The UE measures the to-be-measured frequency based on the RRC reconfiguration message, generates a measurement report, and reports the measurement report to the source base station. The measurement report may include a measurement result of a cell measured by the UE and an event associated with the measurement result, for example, a signal strength of the current source cell is lower than a threshold and a signal strength of the measured cell is higher than the threshold.

Step 3: After receiving the measurement report, the source base station determines, based on the measurement report, whether to hand over the UE to another cell. If handover is required, the source base station selects a target cell from cells reported in the measurement report, and sends a handover request message to a serving base station (referred to as a target base station below) of the target cell.

Step 4: After receiving the handover request message, the target base station determines, based on a current status, whether to allow access of the UE. If the access of the UE is allowed, the target base station sends a handover request acknowledgment message to the source base station. The handover request acknowledgment message includes a parameter required for accessing the target cell (which may be briefly referred to as a handover configuration in this specification), such as a target cell ID (physical cell ID), a radio network temporary identifier (Cell radio network temporary identifier, C-RNTI) allocated by the target cell to the UE, an identifier of a security-related algorithm of the target base station, information about a random access (random access channel, RACH) resource required for accessing the target cell, and other information. For example, the information about the RACH resource may include at least one of the following: a dedicated RACH resource, an association between an RACH resource and a synchronization signal block (synchronization signal/physical broadcast channel block, SSB), an association between an RACH resource and a UE-specific channel state information-reference signal (channel state information-reference signal, CSI-RS) configuration, a common RACH resource, and other information.

Step 5: After receiving the handover request acknowledgment message sent by the target base station, the source base station sends an RRC reconfiguration message (which may be briefly referred to as a handover command in this specification) to the UE, where the handover command includes related information of the target cell and a handover configuration required by the UE to access the target cell. For example, the related information of the target cell may include information such as a physical cell identifier (physical cell identifier, PCI) of the target cell and frequency information of the target cell.

Step 6: The UE initiates random access to the target base station according to the handover command.

Step 7: The UE sends an RRC reconfiguration complete message to the target base station.

Step 8: The target base station sends a context release message to the source base station, so that the source base station releases a context of the UE.

In addition, different from a conventional handover procedure in which a base station is responsible for determining whether handover should be performed, a new handover procedure is introduced into 5G: conditional handover (conditional handover, CHO), which is defined as follows: When one or more handover execution conditions are met, the UE (autonomously) performs handover. Main steps of the conditional handover include: A source base station sends CHO configuration information to UE by using RRC reconfiguration information, where the CHO configuration information includes a handover execution condition corresponding to a candidate cell (also referred to as a potential cell or a candidate target cell) and a related configuration parameter (for example, information such as a PCI and a frequency). After receiving the CHO configuration, the UE may start to evaluate whether the candidate cell meets the handover execution condition. When the candidate cell meets the corresponding handover execution condition, the UE may autonomously determine whether to perform handover to the candidate cell.

The candidate cell may be a cell configured by a network side for the UE to perform CHO (or in other words, prepared for the UE to perform CHO).

A handover execution condition corresponding to each candidate cell may be generated by the source base station. For example, the handover execution condition may be as follows: Signal quality of the candidate cell is higher than that of a current serving cell and is higher than a configured offset. For another example, the handover execution condition may be as follows: Signal quality of a current serving cell is less than a threshold 1, and signal quality of a candidate cell is greater than a threshold 2. For details, refer to an existing protocol. Details are not described herein.

At present, a cell has two types of identification information: a physical cell identifier (physical cell identifier, PCI) and a global cell identifier (Cell Global Identifier, CGI). The PCI is used to distinguish between radio signals of different cells, and it needs to be ensured that there is no same PCI in a coverage area of a coherent cell. However, after a distance, PCIs of different cells may be the same. Therefore, the PCI cannot be used to uniquely identify a cell. The CGI may be used to identify an area covered by a cell, and composition is more complex than that of the PCI. Generally, the CGI may be used to uniquely identify a cell. Generally, a quantity of bits occupied by the PCI is less than a quantity of bits occupied by the CGI. For example, the PCI may occupy 9 bits, and the CGI occupies more than 30 bits.

In a terrestrial network, a base station on the ground is usually configured with a neighboring cell relationship manually, or exchanges a neighboring cell relationship through an interface between base stations, or obtains a neighboring cell relationship from an operations, administration and maintenance (operations, administration and maintenance, OAM) network element (also referred to as a network management network element), or the like, where the neighboring cell relationship includes related information of a neighboring cell of a serving cell, such as a PCI, a CGI, and a frequency of the neighboring cell, a base station identifier of a base station to which the neighboring cell belongs, and other information. In the conventional handover procedure, the measurement result included in the measurement report reported by the UE usually includes information such as a PCI and a frequency of the cell measured by the UE. After receiving the measurement report, the source base station may query the neighboring cell relationship based on the measurement result to determine a corresponding target cell. If the source base station finds a plurality of cells having a same PCI and frequency when querying the neighboring cell relationship based on a PCI and a frequency of a cell in the measurement report, the source base station cannot know a specific cell whose PCI is reported by the UE. This problem may be referred to as PCI confusion or PCI conflict. Alternatively, after determining the target cell by using the measurement report, the source base station may query the neighboring cell relationship to determine the target base station. If a plurality of cells in the neighboring cell relationship have a same PCI and frequency as the target cell when the source base station queries, in the neighboring cell relationship, a base station corresponding to a cell having the same frequency and PCI as the target cell, the source base station cannot uniquely determine the target base station. This problem may also be referred to as PCI confusion or PCI conflict.

In the terrestrial network, a coverage area of a TN cell is small, and generally, cells having a same PCI are not neighboring cells. Therefore, in a neighboring cell relationship configured by the base station on the ground, a case in which a plurality of cells have a same PCI usually does not occur. In the NTN network, a coverage area of an NTN cell is large, and a plurality of TN cells having a same PCI but different CGIs may exist in or around the coverage area of the NTN cell. Therefore, if the source cell is an NTN cell, the source base station queries the neighboring cell relationship based on the PCI reported by the UE, and may find a plurality of cells, resulting in a PCI confusion problem. For example, as shown in FIG. 3, a cell A is an NTN cell, a cell B and a cell C are neighboring cells of the cell A, and the cell B and the cell C have a same PCI. It is assumed that UE currently accesses the cell A. The UE measures the cell B and reports the PCI of the cell B by using a measurement report. A base station to which the cell A belongs is a source base station. After receiving the measurement report, the source base station queries a neighboring cell relationship based on the PCI in the measurement report, and finds the cell B and the cell C. In this case, the source base station cannot determine a specific cell whose PCI is reported by the UE, and therefore the source base station cannot determine a specific cell to which the UE is to be handed over.

Currently, after the UE reports the measurement report, if the base station determines that PCI confusion or conflict occurs in the measurement report, the base station delivers a CGI measurement configuration. The CGI measurement configuration includes a frequency of a measurement object and a PCI corresponding to a cell whose CGI needs to be reported (that is, a same PCI corresponding to a plurality of cells with PCI confusion). After receiving the CGI measurement configuration, the UE may attempt to obtain access-related information (which may be briefly referred to as CGI information) of a related cell based on the CGI measurement configuration, for example, information such as a CGI, a PCI, a tracking area code (Tracking area code, TAI), and a PLMN of the related cell, and report the information to the base station by using a measurement report (which may be referred to as a CGI measurement report). For example, the UE may receive, based on a frequency in the CGI measurement configuration, system information (system information) broadcast by one or more cells corresponding to the frequency, to obtain CGI information of the cell. The UE may determine, based on a PCI included in the CGI information of the cell, whether a PCI of the cell is the same as the PCI in the CGI measurement configuration, and if it is determined that a PCI of a cell is the same as the PCI in the CGI measurement configuration, the CGI information of the cell is reported to the base station by using a CGI measurement report. The base station may compare the CGI reported by the UE with CGIs of the plurality of cells with PCI confusion. If a CGI of a cell in the plurality of cells with PCI confusion is the same as any CGI reported by the UE, the cell may be determined as the target cell.

Currently, in a PCI conflict scenario, the terrestrial network may uniquely determine a target cell by triggering a CGI measurement procedure. However, the terrestrial network requires that a common terminal complete the CGI measurement procedure in about 2s in a frequency range 1 (Frequency range 1, FR1), and complete the CGI measurement procedure in about 16s in FR2, which takes a relatively long time. If the CGI measurement procedure needs to be applied to the NTN network, in a scenario in which a satellite moves quickly, a measurement action may not be completed, and the satellite has moved away. Therefore, in a satellite scenario, if a PCI confusion problem occurs, for a part of terminals (for example, a terminal located at an edge of an NTN cell), the CGI measurement procedure may not be suitable for uniquely determining a target cell, and another manner is required to determine the target cell. Based on this problem, embodiments of this application provide a communication method, apparatus, and system, to determine a unique target cell when a PCI confusion problem occurs.

The following describes the technical solutions in embodiments of this application with reference to the accompanying drawings in embodiments of this application. In the descriptions of this application, "/" represents an "or" relationship between associated objects unless otherwise specified. For example, A/B may represent A or B. The term "and/or" in this application describes only an association relationship between associated objects and indicates that three relationships may exist. For example, A and/or B may indicate the following three cases: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof refers to any combination of these items, including any combination of singular items (pieces) or plural items (pieces). For example, at least one of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, the term such as "example" or "for example" is used to represent giving an example, an illustration, or a description. Any embodiment or design solution described as an "example" or "for example" in embodiments of this application should not be explained as being more preferred or having more advantages than another embodiment or design solution. Exactly, use of the terms such as "example" or "for example" is intended to present a related concept in a specific manner for ease of understanding.

In embodiments of this application, "indication" may include a direct indication and an indirect indication, or may include an explicit indication and an implicit indication. Information indicated by a piece of information (for example, the following first indication information or second indication information) is referred to as to-be-indicated information. In a specific implementation process, the to-be-indicated information is indicated in a plurality of manners, for example, but not limited to, the to-be-indicated information may be directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of all pieces of information that is pre-agreed on (for example, specified in a protocol), to reduce indication overheads to some extent. In addition, a common part of all pieces of information may be identified and indicated in a unified manner, to reduce indication overheads caused by separately indicating same information.

Furthermore, specific indication manners may alternatively be various existing indication manners, for example, but not limited to, the foregoing indication manners and various combinations thereof. For details of the various indication manners, refer to the conventional technology. The details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

It should be understood that the to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in embodiments of this application. The sending periodicities and/or the sending occasions of these pieces of sub-information may be predefined, for example, predefined according to a protocol, or may be configured by a transmitting side device by sending configuration information to a receiving side device.

In embodiments of this application, "predefined, "predefinition, "preconfigured", or "preconfiguration" may be implemented by pre-storing corresponding code or a corresponding table in a device, or may be implemented in another manner for indicating related information, for example, may be burnt into the device before delivery. A specific implementation is not limited in embodiments of this application. "Storage" may be storage in one or more memories. The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in embodiments of this application.

The "protocol" in embodiments of this application may be a protocol family in the communication field, a standard protocol with a frame structure similar to the protocol family, or a related protocol applied to a future communication system. This is not specifically limited in embodiments of this application.

In embodiments of this application, descriptions such as "when...", "in a case of...", and "if" all mean that a device performs corresponding processing in an objective case, and do not limit time, and the device is not required to perform a determining action during implementation. This does not mean that there is another limitation.

It should be noted that the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

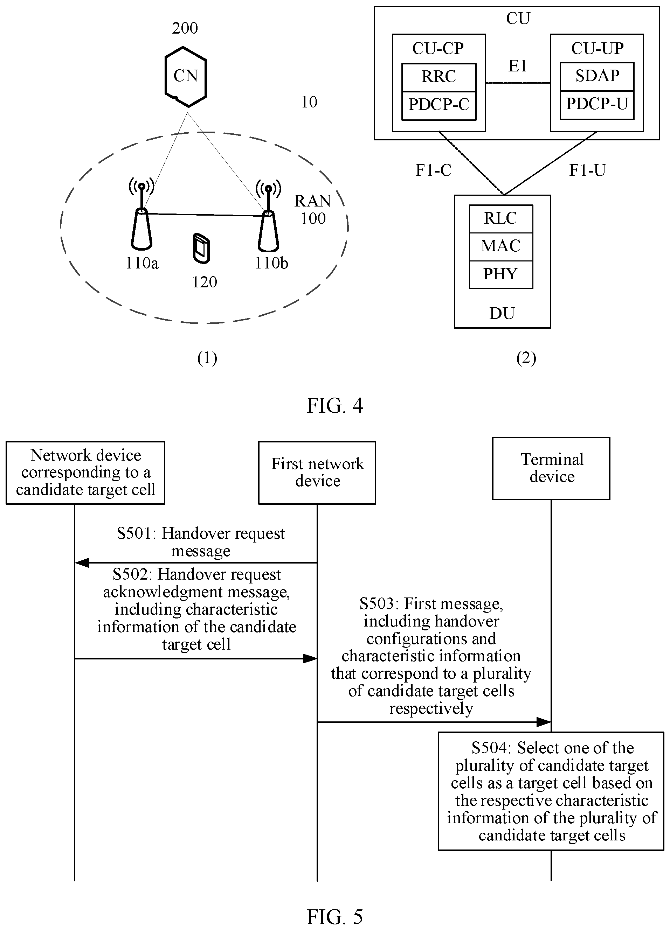

(1) in FIG. 4 is a possible and non-limiting diagram of a system according to an embodiment of this application. As shown in (1) in FIG. 4, a communication system 10 includes a RAN 100, and the RAN 100 includes at least one network device (for example, 110a and 110b in FIG. 4, which are collectively referred to as 110) and at least one terminal device 120. The RAN 100 may further include another device, for example, a wireless relay device and/or a wireless backhaul device (not shown in (1) in FIG. 4). The terminal device 120 may be connected to the network device 110 in a wireless manner.

Optionally, the communication system 10 may further include a core network (core network, CN) 200. The network device 110 may be connected to the core network 200 in a wireless or wired manner. A core network device in the core network 200 and the network device 110 in the RAN 100 may be different physical devices, or may be a same physical device that integrates a logical function of the core network and a logical function of the radio access network.

The RAN 100 may be a cellular system related to the 3rd generation partnership project (3rd generation partnership project, 3GPP), for example, a long term evolution (long term evolution, LTE) system, a 5G system, or a future-oriented evolved system (for example, a 6G mobile communication system). The RAN 100 may alternatively be an NTN network, an open access network (open RAN, O-RAN or ORAN), a cloud radio access network (cloud radio access network, CRAN), or a wireless fidelity (wireless fidelity, Wi-Fi) system. The RAN 100 may alternatively be a communication system that integrates two or more of the foregoing systems. In addition, terms "system" and "network" are interchangeable with each other.

Optionally, if the RAN 100 is an NTN network, for an architecture of the RAN 100, refer to the foregoing descriptions of the RAN architecture based on the NTN network. The network device 110 may be a base station in the RAN architecture based on the NTN network, and the terminal device 120 may be UE in the RAN architecture based on the NTN network.

It should be noted that the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

An example in which any network device 110 (referred to as a first network device 110 below) shown in (1) in FIG. 4 interacts with any terminal device 120 is used. In a communication method provided in an embodiment of this application, the first network device 110 sends a handover request message to a plurality of candidate target cells, where the plurality of candidate target cells have same first identification information. The network device 110 receives handover request acknowledgment messages corresponding to the plurality of candidate target cells respectively, where each handover request acknowledgment message includes characteristic information and a handover configuration of the candidate target cell. The network device 110 sends a first message to the terminal device 120, where the first message includes handover configurations and characteristic information that correspond to the plurality of candidate target cells respectively. The terminal device selects one of the plurality of candidate target cells as a target cell based on the characteristic information. The terminal device 120 applies the handover configuration of the target cell to perform handover to the target cell. Specific implementations and technical effects of this solution are described in detail in subsequent method embodiments, and details are not described herein.

The network device 110 in embodiments of this application is a radio access network (radio access network, RAN) node (or device) that connects a terminal to a wireless network, and may also be referred to as a base station. Currently, some examples of the network device are a further evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), and the like. In addition, in a network structure, the network device may include a CU node or a DU node, or include a CU node and a DU node. The network device including the CU node and the DU node splits protocol layers of a gNB in an NR system. Some functions of the protocol layers are centrally controlled by a CU, and some or all of remaining functions of the protocol layers are distributed in a DU, and the CU centrally controls the DU. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

Further, (2) in FIG. 4 is a diagram of a possible and non-limiting CU-DU architecture according to an embodiment of this application. As shown in (2) in FIG. 4, a central unit CU may be further divided into a control plane (control plane, CP) (CU-CP) and a user plane (user plane) (CU-UP). The CU-CP is responsible for a control plane function, mainly including RRC and a packet data convergence protocol (packet data convergence protocol, PDCP) layer corresponding to the control plane, that is, a PDCP-C. The PDCP-C is mainly responsible for data encryption and decryption, integrity protection, data transmission, and the like on the control plane. The CU-UP is responsible for a user plane function, mainly including a service data adaptation protocol (service data adaptation protocol, SDAP) layer and a PDCP corresponding to the user plane, that is, a PDCP-U. The SDAP is mainly responsible for processing data of a core network and mapping a flow to a bearer. The PDCP-U is mainly responsible for encryption and decryption, integrity protection, header compression, sequence number maintenance, data transmission, and the like on a data plane. The DU may be further divided into a radio link control (radio link control, RLC) layer, a medium access control (medium access control, MAC) layer, and a physical (physical, PHY) layer. The RLC is mainly responsible for providing segmentation, retransmission processing, and the like for data. The MAC is mainly responsible for controlling and connecting a physical medium of the physical layer, and the like. The PHY layer is mainly responsible for data transmission and the like. The CU-CP is connected to the CU-UP through an E1 interface. On behalf of a gNB, the CU-CP is connected to the core network through an NG interface, and is connected to the DU through an F1 interface-control plane, namely, F1-C. The CU-UP is connected to the DU through an F1 interface-user plane, namely, F1-U. Certainly, in another possible implementation, the PDCP-C is also in the CU-UP.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

All or some functions of the network device in this application may alternatively be implemented through a software function running on hardware, or implemented through a virtualized function instantiated on a platform (for example, a cloud platform). The network device in this application may alternatively be a logical node, a logical module, or software that can implement all or some functions of the network device.

The terminal device in embodiments of this application may also be referred to as a terminal (terminal), UE, a mobile station (mobile station, MS), a mobile terminal, or the like, and is a device that provides voice and/or data connectivity for a user. The terminal device may be widely used in various scenarios, for example, vehicle to everything (vehicle to everything, V2X) communication, machine-type communication (machine-type communication, MTC), the internet of things (internet of things, IoT), virtual reality (virtual reality, VR), augmented reality (augmented reality, AR), industrial control (industrial control), self driving (self driving), remote medical surgery (remote medical surgery), smart grid (smart grid), smart home (smart home), smart office (Smart Office), smart bracelet (smart bracelet), and smart city (smart city). Currently, some examples of the terminal device are a mobile phone, a tablet computer, a computer having a wireless transceiver function, a wearable device, a vehicle, an uncrewed aerial vehicle, a helicopter, an airplane, a ship, a robot, a robot arm, a smart home device, and the like. A device form of the terminal device is not limited in embodiments of this application.

The core network device in embodiments of this application is a device, in the core network, that provides service support for the terminal device. Currently, some examples of the core network device are an access and mobility management function (access and mobility management function, AMF) entity, a session management function (session management function, SMF) entity, a user plane function (user plane function, UPF) entity, and the like, which are not listed one by one herein. The AMF entity may be responsible for access management and mobility management of a terminal. The SMF entity may be responsible for session management, for example, user session establishment. The UPF entity may be a functional entity on a user plane, and is mainly responsible for connecting to an external network. It should be noted that, the entity in this application may also be referred to as a network element or a functional entity. For example, the AMF entity may also be referred to as an AMF network element or an AMF functional entity. For another example, the SMF entity may also be referred to as an SMF network element, an SMF functional entity, or the like.

With reference to FIG. 1 to FIG. 4, the following describes, by using an example in which the network device 110 and any terminal device 120 shown in FIG. 4 interact with each other, the communication method provided in embodiments of this application.

It should be noted that names of messages between network elements, names of parameters in the messages, or the like in the following embodiments of this application are merely examples, and there may be other names in a specific implementation. This is not specifically limited in embodiments of this application.

It should be noted that, in the following embodiments, a similar expression such as "sending a message to a cell" means sending a message to a network device corresponding to the cell. A similar expression such as "receiving a message corresponding to a cell" means receiving a message sent by a network device corresponding to the cell.

It should be noted that in embodiments of this application, "a network device corresponding to a cell" may also be referred to as "a network device to which a cell belongs". For example, in the following embodiments, a network device corresponding to a candidate target cell and a network device to which a candidate target cell belongs may be understood as a same concept, and may be replaced with each other.

FIG. 5 shows a communication method according to an embodiment of this application. In FIG. 5, an example in which a first network device, a network device corresponding to a candidate target cell, and a terminal device are used as execution bodies of an interaction example is used to describe the method. However, the execution bodies of the interaction example are not limited in this application. For example, the first network device in FIG. 5 may alternatively be a module used in the first network device, for example, a chip, a chip system, or a processor, or may be a logical node, a logical module, or software that can implement all or some functions of the first network device. The network device corresponding to the candidate target cell in FIG. 5 may alternatively be a module used in the network device corresponding to the candidate target cell, for example, a chip, a chip system, or a processor, or may be a logical node, a logical module, or software that can implement all or some functions of the network device corresponding to the candidate target cell. The terminal device in FIG. 5 may alternatively be a module used in the terminal device, for example, a chip, a chip system, or a processor, or may be a logical node, a logical module, or software that can implement all or some functions of the terminal.

The communication method shown in FIG. 5 may be applied to a cell handover scenario. The first network device and the terminal device may perform the communication method shown in FIG. 5. The first network device delivers a plurality of candidate target cells having same first identification information to the terminal device, and the terminal device determines a target cell from the plurality of candidate target cells having the same first identification information, so that the terminal device may be handed over from a currently accessed source cell (also referred to as a serving cell) to the target cell. The first network device may be a network device corresponding to the source cell. For example, the first network device may be a serving base station (also referred to as a source base station) of the source cell.

Optionally, the first network device may be a network device (also referred to as a network device in an NTN network) that provides an NTN service. The network device corresponding to the candidate target cell may be a network device (also referred to as a network device in a TN network) that provides a TN service. Alternatively, the first network device may be a network device that provides a TN service. The network device corresponding to the candidate target cell may be a network device that provides an NTN service.

As shown in FIG. 5, the communication method includes steps S501 to S504.

S501: The first network device sends a handover request message to the plurality of candidate target cells, where the plurality of candidate target cells have the same first identification information. The handover request message indicates that the terminal device may access the candidate target cell.

The first identification information is identification information that may be used to identify a cell. However, the first identification information cannot be used to uniquely identify the cell, and different cells may have same first identification information. For example, the first identification information may be a PCI of the cell.

In S501, the candidate target cell is a cell that is determined by the first network device based on the first identification information and whose first identification information is the same as first identification information of the target cell. In other words, when determining the target cell based on the first identification information of the target cell, the first network device determines the plurality of candidate target cells. The first identification information of the plurality of candidate target cells is the same as the first identification information of the target cell, and the first network device cannot determine the unique target cell from the plurality of candidate target cells based only on the first identification information. This case may also be referred to as a problem that confusion/conflict of the first identification information occurs when the target cell is determined.

In a possible implementation, the candidate target cell may be determined by the first network device based on a measurement report reported by the terminal device. In this implementation, before S501, the first network device indicates the terminal device to measure a neighboring cell. After completing measurement, the terminal device sends a measurement report to the first network device to report information about one or more neighboring cells measured by the terminal device, where the information includes information such as first identification information of the neighboring cell. The first network device selects, based on the measurement report reported by the terminal device, one of the one or more neighboring cells measured by the terminal device as the target cell. Optionally, the first network device may further determine the target cell based on a neighboring cell relationship, for example, query the neighboring cell relationship based on the first identification information of the target cell. The first network device finds, by querying the neighboring cell relationship, a plurality of cells whose first identification information is the same as the first identification information of the target cell, and cannot determine a specific cell that is the target cell measured by the terminal device. Therefore, the plurality of found cells may be referred to as candidate target cells.

The neighboring cell relationship includes information about a neighboring cell stored by the first network device. The neighboring cell may be understood as a neighboring cell of the source cell stored by the first network device, or may be understood as neighboring cells of all cells stored by the first network device. In this implementation, the neighboring cell relationship includes the first identification information of the neighboring cell. Optionally, the neighboring cell relationship may further include information such as frequency information and second identification information of the neighboring cell, and device identification information (such as a base station identifier) of a network device to which the neighboring cell belongs. The second identification information is identification information that may be used to uniquely identify a cell, for example, a CGI of the cell.

It should be noted that, in this embodiment of this application, the neighboring cell relationship is an example, and is a general term for the information about the neighboring cell stored by the first network device. In actual application, the neighboring cell relationship may alternatively be replaced with another name, for example, neighboring cell information, which does not affect application of this embodiment of this application.

Optionally, the neighboring cell relationship may be preconfigured in the first network device. For example, the neighboring cell relationship may be manually configured by a staff member. Alternatively, the first network device may obtain the neighboring cell relationship from an OAM network element. Alternatively, the first network device may generate the neighboring cell relationship by using a CGI measurement report reported by the terminal device. A manner of obtaining the neighboring cell relationship is not limited in this embodiment of this application.

Optionally, in this implementation, the measurement report reported by the terminal device may further include information such as a frequency of the neighboring cell, signal quality of the neighboring cell, and/or location information of the terminal device (for example, coarse location information and precise location information of the terminal device).

The coarse location information of the terminal device is location information whose error between an indicated location and an actual location of the terminal device is within a specific range, and may also be understood as rough location information of the terminal device. Compared with the coarse location information, an error between a location indicated by the precise location information of the terminal device and the actual location of the terminal device is smaller.

Optionally, the plurality of candidate target cells may have a same frequency. Correspondingly, in the foregoing implementation, that the first network device determines the candidate target cell based on the first identification information may be replaced with that the first network device determines the candidate target cell based on the first identification information and the frequency information. In this optional solution, the measurement report reported by the terminal device includes the frequency information of the neighboring cell and the first identification information. For example, the first network device may select, based on the measurement report, one of one or more neighboring cells reported by the terminal device as the target cell, and query the neighboring cell relationship based on the first identification information and the frequency of the target cell, to find a plurality of candidate target cells whose first identification information and frequency are the same as those of the target cell.

In this embodiment of this application, the frequency information of the cell may indicate a frequency corresponding to the cell. For example, the frequency of the cell may be information such as an SSB frequency of the cell.

Optionally, in this embodiment of this application, the frequency information of the cell may explicitly indicate the frequency corresponding to the cell, for example, directly indicate the SSB frequency; or may implicitly indicate the frequency corresponding to the cell, for example, may be measurement identification information corresponding to a to-be-measured frequency delivered by the network device.

In another possible implementation, the PCI confusion problem may also occur in a scenario in which conditional handover (conditional handover, CHO) is used. In this scenario, if the first network device determines to use the conditional handover, the first network device sends a handover request message to one or more neighboring cells. After receiving the handover request message, a network device to which the neighboring cell belongs performs access control, and feeds back a handover acknowledgment message to the first network device if the network device agrees to the conditional handover, where the handover acknowledgment message includes a handover configuration of the neighboring cell. After the first network device receives the handover configuration of the neighboring cell, the neighboring cell that agrees to the conditional handover in this implementation is referred to as a candidate target cell in the following. The first network device delivers a handover command to the terminal device, where the handover command includes a handover execution condition and a handover configuration that correspond to each candidate target cell. In this scenario, if the first network device sends the handover request message to a plurality of neighboring cells, the plurality of neighboring cells may have same first identification information or different first identification information. If the plurality of neighboring cells having the same first identification information agree to the conditional handover, there are a plurality of candidate target cells having the same first identification information, that is, the PCI confusion problem occurs.

Optionally, use of the conditional handover may be determined by the first network device based on the measurement report reported by the terminal device.

In this embodiment of this application, compared with the source cell, the candidate target cell may be an intra-station neighboring cell, or may be an inter-station neighboring cell. This is not limited in this embodiment of this application. If a candidate target cell is an intra-station neighboring cell, and a network device corresponding to the candidate target cell is the first network device, in this embodiment of this application, messages exchanged between the network device corresponding to the candidate target cell and the first network device, for example, a handover request message and a handover request acknowledgment message, may be non-explicit. Alternatively, it may be understood as that "sending/receiving a message" between the network device corresponding to the candidate target cell and the first network device is an internal implementation of the first network device. Alternatively, it may be understood as that there is no step of "sending/receiving a message" between the network device corresponding to the candidate target cell and the first network device, but the first network device performs a corresponding function.

S502: After receiving the handover request message, the network device corresponding to the candidate target cell sends the handover request acknowledgment message to the first network device. Correspondingly, the first network device receives handover request acknowledgment messages corresponding to the plurality of candidate target cells respectively. Each handover request acknowledgment message includes characteristic information of the candidate target cell and a handover configuration corresponding to the candidate target cell.

Optionally, the handover request message may include first indication information, and the first indication information indicates the candidate target cell to feed back the characteristic information. It may also be understood as that after receiving the handover request message, the network device corresponding to the candidate target cell may determine, based on the first indication information, that the network device needs to feed back the characteristic information of the candidate target cell. Optionally, the first indication information may be generated and carried in the handover request message after the first network device determines that there are the plurality of candidate target cells having the same first identification information.

It should be noted that a specific meaning of the first indication information is not limited in this embodiment of this application. For example, the first indication information may indicate that the first network device cannot determine the unique target cell. Alternatively, the first indication information may indicate that a problem of confusion of the first identification information (for example, PCI confusion) occurs for the neighboring cell reported by the terminal device. Alternatively, the first indication information may indicate that a problem of confusion of the first identification information (for example, PCI confusion) occurs for the target cell in a current handover procedure. Alternatively, the first indication information may indicate that the first network device has sent the handover request message to the plurality of candidate target cells, and has applied for a cell handover procedure. Alternatively, the first indication information may have another meaning.

In this embodiment of this application, the characteristic information of the candidate target cell is information that is in related information of the candidate target cell and that may represent a difference between the current cell and another candidate target cell, and may be used to uniquely determine the target cell. Optionally, the characteristic information of the candidate target cell may be second identification information and/or area information of the candidate target cell. Alternatively, the characteristic information of the candidate target cell may be other information. This is not specifically limited in this embodiment of this application.

Optionally, the area information of the candidate target cell may indicate a coverage area of the candidate target cell (where the coverage area refers to a geographical area/geographical range that may be covered by a cell signal). For example, if the coverage area of the candidate target cell is circular, the area information of the candidate target cell may include location information of a center point of the coverage area (for example, longitude and latitude of the center point) and a radius length of the coverage area. In a possible case, the area information of the candidate target cell may be coarse location information, that is, a coverage area indicated by the area information of the candidate target cell and an actual coverage area of the candidate target cell may not completely overlap, but have an intersection. Alternatively, the area information of the candidate target cell may be information related to a coverage area of the candidate target cell, for example, a tracking area code (tracking area code, TAC) of the candidate target cell.

In this embodiment of this application, the handover configuration corresponding to the candidate target cell includes related parameter information required for the terminal device to access the candidate target cell, for example, an ID (for example, a PCI) of the candidate target cell, a C-RNTI allocated by the candidate target cell to the terminal device, and RACH resource information. For details, refer to the foregoing descriptions of the handover procedure shown in FIG. 2. Details are not described herein again.

Optionally, the characteristic information of the candidate target cell may also be understood as information required for the terminal device to access the candidate target cell. Therefore, that the handover request acknowledgment message includes the handover configuration and the characteristic information that correspond to the candidate target cell may also be understood as that the handover request acknowledgment message includes the handover configuration corresponding to the candidate target cell, and the handover configuration includes the characteristic information of the candidate target cell.

Optionally, after receiving the handover request message, the network device corresponding to the candidate target cell may determine whether to allow the terminal device to perform access. If the terminal device is allowed to perform access, the handover request acknowledgment message is sent to the first network device. If the terminal device is not allowed to perform access, the handover request acknowledgment message is not sent.

Optionally, the characteristic information of the candidate target cell may be carried in a transparent container included in the handover request acknowledgment message. Content in the transparent container is transparently forwarded to the terminal device. That is, after receiving the handover request message, the first network device may transparently transmit the characteristic information of the candidate target cell carried in the handover request message to the terminal device.

S503: The first network device sends a first message to the terminal device, where the first message includes handover configurations and characteristic information that correspond to the plurality of candidate target cells respectively.

Optionally, the handover configurations and the characteristic information of the plurality of candidate target cells may be carried in one first message, or may be carried in different first messages.

Optionally, the first message may further include other related information of the plurality of candidate target cells, for example, information such as the first identification information of the plurality of candidate target cells and/or respective frequency information of the plurality of candidate target cells.

Optionally, if the conditional handover is used, the first message may further include a handover execution condition corresponding to each candidate target cell. In other words, the first message may be the handover command in the foregoing descriptions of the conditional handover scenario.

Optionally, the first message may further include second indication information. The second indication information may indicate the terminal device to determine the target cell from the plurality of candidate target cells, or indicate the terminal device to determine the target cell from the plurality of candidate target cells based on the characteristic information. It may also be understood as that after receiving the first message, the terminal device may determine, based on the second indication information, that the terminal device needs to autonomously determine the target cell from the plurality of candidate target cells. Optionally, the second indication information may be generated and carried in the first message after the first network device determines that there are the plurality of candidate target cells having the same first identification information.

It should be noted that a specific meaning of the second indication information is not limited in this embodiment of this application. For example, the second indication information may indicate that the problem of confusion of the first identification information occurs for the target cell. Alternatively, the second indication information may indicate that the first message includes the handover configurations corresponding to the plurality of candidate target cells respectively, and the terminal device needs to select the handover configuration of the target cell for handover. Alternatively, the second indication information may have another meaning.

For example, the first message may be an RRC reconfiguration message or signaling in another form.

S504: The terminal device selects one of the plurality of candidate target cells as the target cell based on the characteristic information corresponding to the plurality of candidate target cells respectively.

Optionally, when determining that the first message includes the handover configurations and the characteristic information that correspond to the plurality of candidate target cells respectively and the plurality of candidate target cells have the same first identification information, the terminal device may determine that the terminal device needs to autonomously determine the target cell from the plurality of candidate target cells.

Alternatively, if the first message includes the second indication information, the terminal device may determine, based on the second indication information, that the terminal device needs to autonomously determine the target cell from the plurality of candidate target cells.

Optionally, if the first message includes the frequency and/or the first identification information of the candidate target cell, when determining the target cell, the terminal device may determine whether a frequency band and/or the first identification information of the neighboring cell are/is the same as the frequency and/or the first identification information of the candidate target cell included in the first message, and when determining that the frequency band and/or the first identification information of the neighboring cell are/is the same as the frequency and/or the first identification information of the candidate target cell included in the first message, further determine, based on the characteristic information of the candidate target cell, whether the neighboring cell is the target cell. In other words, the frequency and/or the first identification information of the target cell are/is the same as the frequency and/or the first identification information of the candidate target cell.

For example, the characteristic information of the candidate target cell included in the first message is the second identification information. A specific implementation in which the terminal device selects one of the plurality of candidate target cells as the target cell based on the respective characteristic information of the plurality of candidate target cells may be as follows:
After receiving the first message, the terminal device obtains the second identification information of the neighboring cell of the currently accessed source cell. For example, the terminal device detects a current neighboring cell, to obtain second identification information corresponding to the neighboring cell. If obtained second identification information of a neighboring cell is different from the second identification information of any candidate target cell included in the first message, it is considered that the neighboring cell is not the target cell. If obtained second identification information of a neighboring cell is the same as second identification information of a candidate target cell included in the first message, it is considered that the neighboring cell is the candidate target cell and is also the target cell.

For obtaining the second identification information of the neighboring cell by the terminal device, the terminal device may perform neighboring cell measurement, measure the neighboring cell, and read the second identification information of the neighboring cell. In one manner, the second identification information of the neighboring cell may be read by reading a master information block (master information block, MIB) and a SIB 1 of the neighboring cell.

Optionally, if the first message further includes the first identification information and/or the frequency information of the candidate target cell, when performing neighboring cell measurement, the terminal device may perform measurement based on the first identification information and/or the frequency of the candidate target cell included in the first message. For example, after receiving the first message, the terminal device measures the frequency of the candidate target cell, and after measuring the neighboring cell at the frequency, the terminal device determines whether the first identification information of the neighboring cell is the same as the first identification information of the candidate target cell. If the first identification information of the neighboring cell is the same as the first identification information of the candidate target cell, the terminal device continues to read the second identification information of the measured neighboring cell. If the second identification information of the neighboring cell is the same as second identification information of a candidate target cell included in the first message, it is considered that the neighboring cell is the candidate target cell and is also the target cell. For another example, after receiving the first message, the terminal device first measures a surrounding neighboring cell. If there are one or more neighboring cells whose frequency is the same as the frequency of the candidate target cell and whose first identification information is the same as the frequency of the candidate target cell, the terminal device continues to obtain second identification information of the neighboring cell. If second identification information of a neighboring cell is the same as second identification information of a candidate target cell included in the first message, it is considered that the neighboring cell is the candidate target cell and is also the target cell. For another example, the terminal device reports the measurement report before receiving the first message, where a frequency and/or first identification information of a measured neighboring cell included in the measurement report are/is the same as the frequency and/or the first identification information of the plurality of candidate target cells included in the first message. After receiving the first message, the terminal device may read second identification information of the neighboring cell. If the second identification information of the neighboring cell is the same as second identification information of a candidate target cell included in the first message, it is considered that the neighboring cell is the candidate target cell and is also the target cell.

Based on this optional solution, the terminal device may first obtain the first identification information of the neighboring cell, and determine, based on the first identification information of the neighboring cell, whether to further obtain the second identification information of the neighboring cell. If the first identification information of the neighboring cell is different from the first identification information included in the first message, it indicates that the first identification information of the neighboring cell is different from the first identification information of the target cell. Therefore, the neighboring cell is not the target cell, and the second identification information of the neighboring cell does not need to be further read, to save resources.

For example, the characteristic information of the candidate target cell included in the first message is the area information. A specific implementation in which the terminal device selects one of the plurality of candidate target cells as the target cell based on the respective characteristic information of the plurality of candidate target cells may be as follows:
After receiving the first message, the terminal device determines, based on a current location of the terminal device, whether the terminal device is located in a coverage area of a specific candidate target cell. If the terminal device determines that the terminal device is currently located in the coverage area of the candidate target cell, it is considered that the candidate target cell is the target cell.

Optionally, the terminal device may first obtain the first identification information of the measured neighboring cell. If first identification information of a measured neighboring cell is the same as the first identification information of the candidate target cell, it is considered that the neighboring cell may be a candidate target cell. The terminal device further determines whether the terminal device is currently located in a coverage area of the candidate target cell. If the terminal device is currently located in the coverage area of the candidate target cell, it is considered that the candidate target cell is the target cell.

Optionally, in a scenario in which conditional handover is used, the terminal device may determine the target cell in any one of the following three possible manners.

Manner 1: The first message includes the second identification information and the first identification information that correspond to the plurality of candidate target cells respectively. The plurality of candidate target cells have same first identification information. Optionally, the plurality of candidate target cells may alternatively have different first identification information. The terminal device evaluates, based on the handover execution condition corresponding to the candidate target cell in the first message, whether the candidate target cell meets the handover execution condition. When a candidate target cell meets the handover execution condition, and the first message includes another candidate target cell whose first identification information is the same as the first identification information of the candidate target cell, the terminal device first reads the second identification information of the candidate target cell, and then applies the second identification information to the handover configuration of the candidate target cell having the second identification information to perform handover.

Optionally, candidate target cells with the same first identification information may correspond to a same handover execution condition. For example, the second identification information is a CGI, the first message includes PCIs of a candidate target cell 1 and a candidate target cell 2, the PCIs of the candidate target cell 1 and the candidate target cell 2 are the same, and CGIs of the candidate target cell 1 and the candidate target cell 2 are different. The first message further carries the respective CGIs of the candidate target cell 1 and the candidate target cell 2. If the terminal device learns, through measurement, that a PCI of a neighboring cell is the same as the PCIs of the candidate target cells 1 and 2, and the neighboring cell meets handover execution conditions of the candidate cells 1 and 2, the terminal device further determines whether a CGI of the neighboring cell is the same as the CGI of the candidate target cell 1 or the CGI of the candidate target cell 2, and selects a handover configuration of the candidate target cell whose CGI is the same as the CGI of the neighboring cell to perform handover. When a candidate target cell meets a handover condition, and the first message does not include another candidate target cell whose PCI is the same as that of the candidate target cell, it may be considered that the candidate target cell is the target cell, and handover is directly performed.

Manner 2: The handover execution condition included in the first message carries the second identification information of the candidate target cell. It may also be understood as that the terminal device evaluates, based on the second identification information, whether the candidate target cell meets the handover condition. It may also be understood as that the terminal device needs to determine whether the second identification information of the candidate target cell meets the handover execution condition. Alternatively, Manner 2 may be as follows: The handover configuration included in the first message includes the second identification information, and the terminal device further needs to additionally determine the second identification information when evaluating that a candidate target cell meets the handover execution condition.

For example, that the terminal device determines the second identification information, or the terminal device determines whether the second identification information meets the handover execution condition may be as follows: The terminal device determines whether the second identification information of the measured neighboring cell is the same as second identification information of a candidate target cell.

Manner 3: The first message carries the area information of the candidate target cell. In one manner, the handover configuration of the candidate target cell includes the area information of the candidate target cell. In another manner, the handover execution condition corresponding to the candidate target cell includes the area information of the candidate target cell. When the location of the terminal device is in an area indicated by the area information, it is considered that the handover execution condition corresponding to the candidate target cell is met, and the candidate target cell may be considered as the target cell.

Optionally, in a conditional handover scenario, the handover request message may include one piece of indication information, where the indication information may indicate the candidate target cell to include the characteristic information of the candidate target cell in the returned handover request acknowledgment message. A specific meaning of the indication information is not limited in this embodiment of this application. For example, the indication information may indicate that the first network device sends the handover request message to the plurality of candidate target cells having the same first identification information. For another example, the indication information may be one piece of first identification information. If the first identification information of the candidate target cell is the first identification information carried in the handover request message, the candidate target cell needs to include the characteristic information of the candidate target cell in the returned handover request acknowledgment message.

Further, after determining the target cell, the terminal device may apply the handover configuration corresponding to the target cell in the first message to perform handover to the target cell.

Optionally, after determining the target cell, the terminal device may start to perform downlink synchronization with the target cell, and apply the handover configuration corresponding to the target cell.

Optionally, after successfully accessing the target cell, the terminal device may delete a handover configuration corresponding to another candidate target cell in the first message other than the handover configuration of the target cell. Alternatively, the terminal device may retain a handover configuration corresponding to another candidate target cell in the first message other than the handover configuration corresponding to the target cell. The retained handover configuration corresponding to the another candidate target cell may be used in a subsequent cell handover procedure.

Optionally, after the terminal device is handed over to the target cell, the first network device may send a handover cancel message to a network device corresponding to another candidate target cell in the plurality of candidate target cells other than the target cell, to indicate to release a prepared handover resource. After receiving the handover cancel message, the network device corresponding to the another candidate target cell releases the handover resource prepared for handover of the terminal device.

Alternatively, the network device corresponding to the another candidate target cell other than the target cell may autonomously release the prepared handover resource. For example, the network device corresponding to the candidate target cell may maintain a timer, and start the timer after receiving the handover request message, or start the timer when sending the handover request acknowledgment message, or start the timer at a start time point based on the start time point and duration that are carried in the handover request message. If the terminal device does not request to access the candidate target cell until the timer expires, the network device corresponding to the candidate target cell automatically releases the prepared handover resource. If the terminal device requests to access the candidate target cell before the timer expires, the network device corresponding to the candidate target cell stops the timer.

Optionally, after the terminal device is handed over to the target cell, the network device corresponding to the target cell may send, to the first network device, a message such as a message indicating that the terminal device is successfully handed over (which may be briefly referred to as a handover success message), or a message indicating the first network device to release a context of the terminal device (which may be briefly referred to as a context release message).

Optionally, the handover success message or the context release message may carry the second identification information of the target cell.

Optionally, after receiving the handover success message or the context release message, the first network device may send a handover cancel message to the network device corresponding to the another candidate target cell. In other words, that the first network device sends the handover cancel message may be triggered by receiving the handover success message or the context release message.

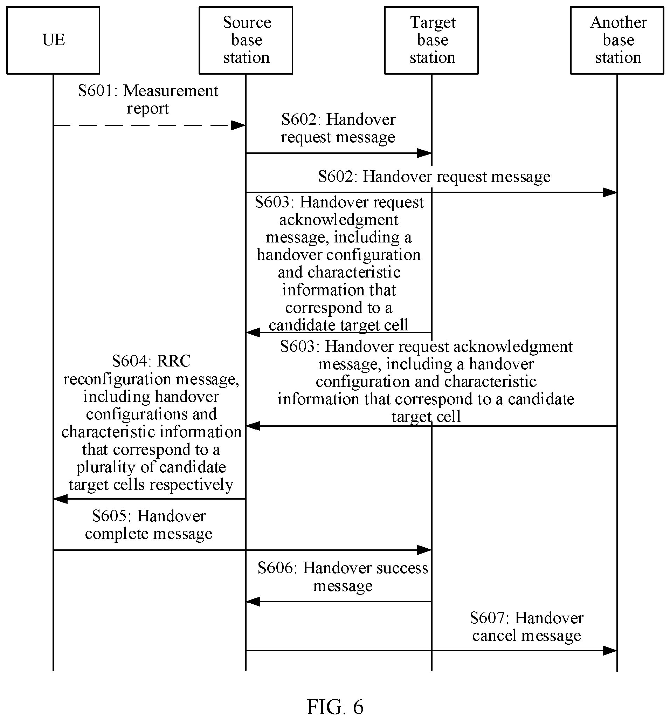

It is assumed that in the embodiment in which the terminal device selects one target cell based on the characteristic information of the plurality of candidate target cells, the first network device is a source base station, the terminal device is UE, the network device corresponding to the target cell is a target base station, and the network device corresponding to another candidate target cell is another base station. The following describes a possible procedure of this embodiment with reference to FIG. 6. As shown in FIG. 6, this embodiment may include the following steps.

S601: The UE sends a measurement report to the source base station, where the measurement report includes information such as a PCI of a neighboring cell, cell signal quality, and a measurement identifier measured by the UE.

After receiving the measurement report, the source base station may determine, based on the measurement identifier in the measurement report, a specific measurement object that is delivered by the source base station and on which the UE obtains the measurement result based. The measurement object includes frequency information. Therefore, the source base station may determine, based on the measurement report, a frequency of a cell measured by the UE.

After receiving the measurement report, the source base station may determine one neighboring cell as a target cell based on the measurement report (for example, based on the cell signal quality), query a frequency and a PCI of the target cell based on a neighboring cell relationship, and find that a plurality of candidate target cells have a same PCI and frequency. In this case, the source base station cannot determine a unique target cell.

Step S601 is optional.

S602: The source base station sends a handover request message to base stations (including the target base station and the another base station) corresponding to the plurality of candidate target cells respectively. The handover request message includes first indication information, indicating that the source base station cannot determine the unique target cell.

For details of S601 and S602, refer to the foregoing descriptions of S501. Details are not described herein again.

S603: The base stations corresponding to the plurality of candidate target cells respectively send a handover request acknowledgment message to the source base station. The handover request acknowledgment message includes a handover configuration and characteristic information that correspond to the candidate target cell.

The characteristic information of the candidate target cell may be a CGI or area information.

For details of S603, refer to the foregoing descriptions of S502. Details are not described herein again.

S604: The source base station sends an RRC reconfiguration message to the UE. The RRC reconfiguration message includes handover configurations and characteristic information that correspond to the plurality of candidate target cells respectively, and first indication information that indicates the UE to autonomously determine the target cell.

S605: After receiving the RRC reconfiguration message, the UE determines the target cell based on the respective characteristic information of the plurality of candidate target cells, performs downlink synchronization with the target cell based on a handover configuration of the target cell, and sends a handover complete message to the target cell, that is, sends the handover complete message to a base station of the target cell (the target base station).

S606: The target base station sends a handover success message to the source base station.

S607: The source base station sends a handover cancel message to the another base station.

In addition, optionally, if the terminal device cannot uniquely determine one target cell from the plurality of candidate target cells, the terminal device may send, to the first network device, indication information indicating that the terminal device fails to determine the target cell.

For example, if second identification information of the neighboring cell obtained by the terminal device is different from second identification information of any candidate target cell included in a first message, it may be considered that determining the target cell fails. Optionally, in this case, the indication information that is sent by the terminal device to the first network device and that indicates that the terminal device fails to determine the target cell may carry the second identification information of the neighboring cell obtained by the terminal device.

Optionally, if the first network device receives the indication information indicating that the terminal device fails to determine the target cell, the first network device may deliver a CGI measurement configuration to the terminal device, so that the terminal device measures CGI-related information of the neighboring cell and reports a CGI measurement report. The first network device may subsequently initiate a handover procedure again by using the CGI measurement report. It may be understood that, because the first network device may uniquely determine the target cell based on the CGI measurement report, the first network device may need to initiate a handover procedure only to the target cell.

Optionally, if the indication information indicating that the terminal device fails to determine the target cell includes the second identification information of the neighboring cell obtained by the terminal device, the first network device may use the neighboring cell as the target cell, send the handover request message to the target cell, and send the received handover configuration of the target cell to the terminal device, so that the terminal device may be handed over to the target cell.

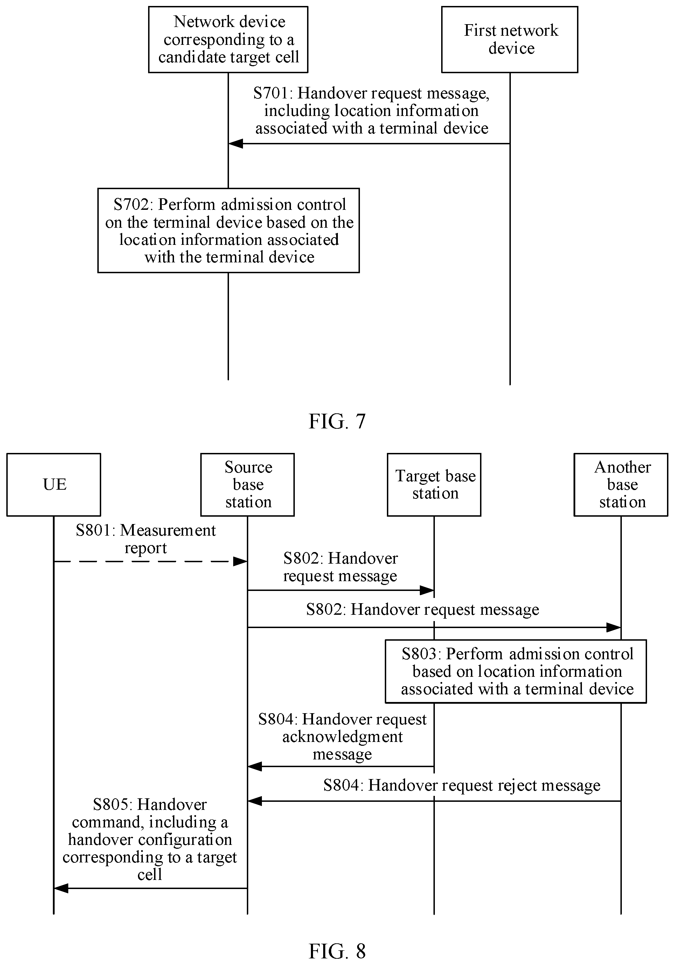

FIG. 7 shows another communication method according to an embodiment of this application. In FIG. 7, an example in which a first network device and a network device corresponding to a candidate target cell are used as execution bodies of an interaction example is used to describe the method. However, the execution bodies of the interaction example are not limited in this application. For example, the first network device in FIG. 7 may alternatively be a module used in the first network device, for example, a chip, a chip system, or a processor, or may be a logical node, a logical module, or software that can implement all or some functions of the first network device. The network device corresponding to the candidate target cell in FIG. 7 may alternatively be a module used in the network device corresponding to the candidate target cell, for example, a chip, a chip system, or a processor, or may be a logical node, a logical module, or software that can implement all or some functions of the network device corresponding to the candidate target cell.

The communication method shown in FIG. 7 may be applied to a cell handover scenario. The first network device and the network device corresponding to the candidate target cell may perform the communication method shown in FIG. 7, to determine a target cell from a plurality of candidate target cells having same first identification information, so that a terminal device may be handed over from a currently accessed source cell (also referred to as a serving cell) to the target cell. The first network device may be a network device corresponding to the source cell. For example, the first network device may be a serving base station (which may be referred to as a source base station) of the source cell.

As shown in FIG. 7, the communication method includes steps S701 and S702.

S701: The first network device sends a handover request message to the plurality of candidate target cells, where the plurality of candidate target cells have the same first identification information. The handover request message includes location information associated with the terminal device.

In S701, for definitions of the candidate target cell and the first identification information, and how the first network device determines the candidate target cell, refer to the foregoing descriptions of S501. Details are not described herein again.

Optionally, the plurality of candidate target cells may also have a same frequency. In this case, for how the first network device determines the candidate target cell, refer to the foregoing descriptions of S501. Details are not described herein again.

The location information associated with the terminal device may indicate a location of the terminal device. For example, the location information associated with the terminal device may include at least one of the following: area information of a beam in which the terminal device is located, information about a geographical area in which the terminal device is located, location information of the terminal device, and the like.

The area information of the beam in which the terminal device is located may indicate a geographical area that covers the beam of the terminal device. For example, assuming that the terminal device is covered by a beam 0 of the source cell, the area information of the beam in which the terminal device is located may be coverage area information of the beam 0, and the coverage area information of the beam 0 may indicate a geographical area covered by the beam. The network device (that is, the first network device) to which the source cell belongs has coverage area information of each beam of the source cell. The terminal device feeds back, to the first network device, that the terminal device is covered by the beam 0. In this case, the first network device may use the coverage area information of the beam 0 as the area information of the beam in which the terminal device is located, and include the area information in the handover request message.

The information about the geographical area in which the terminal device is located may indicate a geographical area in which the terminal device is currently located. For example, the source cell broadcasts information about a plurality of geographical areas, and the plurality of geographical areas are respectively referred to as an area 1, an area 2, and an area 3. The terminal device determines, based on a location of the terminal device, an area in which the terminal device is located, and feeds back the area in which the terminal device is located to the source cell (or feeds back the area to the network device to which the source cell belongs, that is, feeds back the area to the first network device). For example, assuming that the terminal device is currently located in the area 1, the terminal device feeds back that the terminal device is located in the area 1, and the first network device uses information about the area 1 as the information about the geographical area in which the terminal device is located, and includes the information in the handover request message.

The location information of the terminal device may indicate a geographical location of the terminal device. The location information of the terminal device may include precise location information or coarse location information of the terminal device (for a specific meaning, refer to the foregoing descriptions. Details are not described herein again). For example, the first network device indicates the terminal device to report the coarse location information, and the terminal device reports the coarse location information of the terminal device to the first network device. The first network device includes the coarse location information of the terminal device in the handover request message.

Optionally, the location information associated with the terminal device may indicate a point, for example, may be longitude and latitude information, or may indicate an area, for example, indicate a location of a central point of a circular area and a radius of the circular area. A specific form of the location information associated with the terminal device is not limited in this embodiment of this application.

How the first network device obtains the location information associated with the terminal device is not limited in this embodiment of this application. For example, the terminal device may report the information about the geographical area in which the terminal device is located or the location information of the terminal device to the first network device. For another example, the first network device may position the terminal device, to obtain the location information of the terminal device.

Optionally, the first network device may simultaneously send handover request messages to network devices corresponding to the plurality of candidate target cells, or in other words, the first network device may send handover request messages processed in parallel to network devices corresponding to the plurality of candidate target cells. Alternatively, the first network device may respectively send handover request messages to network devices corresponding to the plurality of candidate target cells, or in other words, the first network device may send handover request messages processed in series to network devices corresponding to the plurality of candidate target cells. This is not limited in this embodiment of this application.

S702: The network device corresponding to the candidate target cell performs admission control on the terminal device based on the location information associated with the terminal device.

If the network device corresponding to the candidate target cell determines, based on the location information associated with the terminal device, that the terminal device is located in a coverage area of the candidate target cell, the admission control succeeds. If the network device corresponding to the candidate target cell determines that the terminal device is not located in a coverage area of the candidate target cell, the admission control fails.

Optionally, the network device corresponding to the candidate target cell may further perform admission control based on other information.

It should be noted that, in this embodiment of this application, the admission control is an example name of an implementation in which a network device corresponding to a cell determines whether the terminal device may access the cell. The implementation in which the network device corresponding to the cell determines whether the terminal device may access the cell may also have another name, which does not affect the technical solutions protected in embodiments of this application. For example, the admission control may also be referred to as access control or handover request access control, and performing admission control may also be referred to as performing access control or performing handover request access control.

That the network device corresponding to the candidate target cell performs the admission control on the terminal device based on the location information associated with the terminal device may also be understood as that the candidate target cell performs the admission control on the terminal device based on the location information associated with the terminal device.

If admission control performed by a network device corresponding to a candidate target cell succeeds, the candidate target cell is the target cell. In other words, the target cell belongs to the plurality of candidate target cells, and the terminal device is located in a coverage area of the target cell.

Optionally, if the handover request message further includes frequency information of the target cell, the network device corresponding to the candidate target cell may further determine, based on determining whether the terminal device is located in the coverage area of the candidate target cell, whether a frequency of the candidate target cell is the same as a frequency of the target cell in the handover request message. If it is determined that the terminal device is located in the coverage area of the candidate target cell, and the frequency of the candidate target cell is the same as the frequency of the target cell in the handover request message, the admission control succeeds, and the candidate target cell is the target cell.

Optionally, if the handover request message further includes frequency information and first identification information of the target cell, the network device corresponding to the candidate target cell may further determine, based on determining whether the terminal device is located in the coverage area of the candidate target cell, whether a frequency and the first identification information of the candidate target cell are the same as a frequency and the first identification information of the target cell in the handover request message. If it is determined that the terminal device is located in the coverage area of the candidate target cell, and the frequency and the first identification information of the candidate target cell are the same as the frequency and the first identification information of the target cell in the handover request message, the admission control succeeds, and the candidate target cell is the target cell.

Optionally, after S702, the method may further include the following step.

S703: After successfully performing admission control, a network device corresponding to the target cell sends a handover request acknowledgment message to the first network device. Correspondingly, the first network device receives the handover request acknowledgment message corresponding to the target cell, to indicate that the terminal device is allowed to perform handover to the target cell. The handover request acknowledgment message may include a handover configuration corresponding to the target cell.

The handover configuration corresponding to the target cell includes a related configuration parameter required for accessing the target cell, for example, information such as a C-RNTI allocated by the target cell to the terminal device and information about a RACH resource required for accessing the target cell. For details, refer to the foregoing descriptions. Details are not described herein again.

Optionally, a network device corresponding to a candidate target cell that fails to perform admission control may send a handover reject message to the first network device, to indicate that the terminal device is not allowed to perform handover to the candidate target cell, or may not send a message.

Optionally, after S703, the method may further include the following step.

S704: The first network device sends a first message to the terminal device, where the first message includes the handover configuration corresponding to the target cell.

Optionally, the first message may further include other related information of the target cell, for example, information such as the first identification information of the target cell and/or the frequency information of the target cell.

For example, the first message may be an RRC reconfiguration message or signaling in another form.

Correspondingly, after receiving the first message, the terminal device may apply the handover configuration corresponding to the target cell in the first message to perform handover to the target cell.

It is assumed that in the embodiment in which the network device corresponding to the candidate target cell performs admission control based on the location information associated with the terminal device, the first network device is a source base station, the terminal device is UE, the network device corresponding to the target cell is a target base station, and the network device corresponding to another candidate target cell is another base station. The following describes a possible procedure of this embodiment with reference to FIG. 8. As shown in FIG. 8, this embodiment may include the following steps.

S801: The UE sends a measurement report to the source base station, where the measurement report includes information such as a PCI of a neighboring cell, cell signal quality, and a measurement identifier measured by the UE.

After receiving the measurement report, the source base station may determine one neighboring cell as a target cell based on the measurement report (for example, based on the cell signal quality), query a frequency and a PCI of the target cell based on a neighboring cell relationship, and find that a plurality of candidate target cells have a same PCI and frequency. In this case, the source base station cannot determine a unique target cell.

Step S801 is optional.

S802: The source base station sends a handover request message to base stations (including the target base station and the another base station) corresponding to the plurality of candidate target cells respectively. The handover request message includes location information associated with the terminal device.

For details of S802, refer to the foregoing descriptions of S702. Details are not described herein again.

S803: The base stations corresponding to the plurality of candidate target cells respectively perform admission control based on the location information associated with the terminal device.

The target base station determines that the terminal device is located in a coverage area of the target cell, and the admission control succeeds. The another base station determines that the terminal device is not located in a coverage area of the candidate target cell, and the admission control fails.

For details of S803, refer to the foregoing descriptions of S702. Details are not described herein again.

S804: The target base station sends a handover request acknowledgment message to the source base station, where the handover request acknowledgment message includes a handover configuration corresponding to the target cell. The another base station sends a handover reject message to the source base station.

S805: The source base station sends a handover command to the UE, where the handover command includes the handover configuration corresponding to the target cell.

Optionally, after receiving the handover command, the UE may be handed over to the target cell based on the handover configuration corresponding to the target cell.

For details of S804 and S805, refer to the foregoing descriptions of S703 and S704. Details are not described herein again.

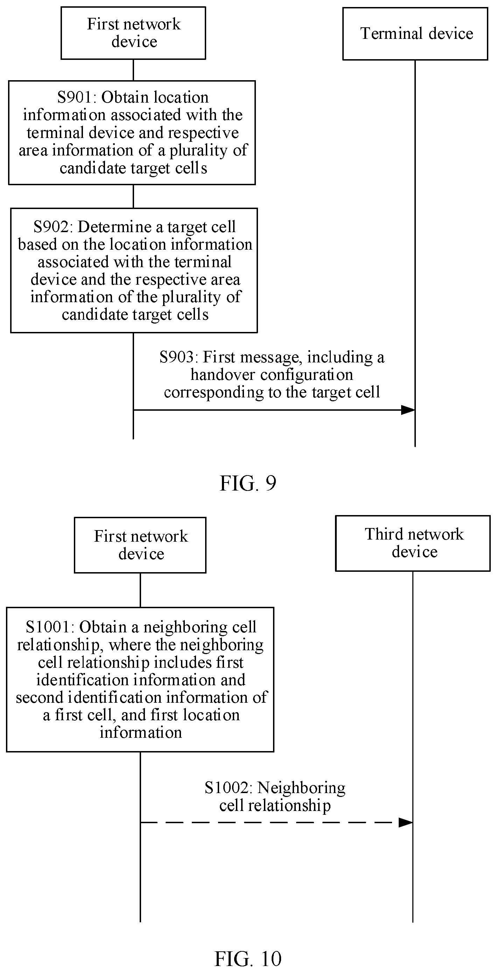

FIG. 9 shows another communication method according to an embodiment of this application. In FIG. 9, an example in which a first network device and a terminal device are used as execution bodies of an interaction example is used to describe the method. However, the execution bodies of the interaction example are not limited in this application. For example, the first network device in FIG. 9 may alternatively be a module used in the first network device, for example, a chip, a chip system, or a processor, or may be a logical node, a logical module, or software that can implement all or some functions of the first network device. The terminal device in FIG. 9 may alternatively be a module used in the terminal device, for example, a chip, a chip system, or a processor, or may be a logical node, a logical module, or software that can implement all or some functions of the terminal device.

The communication method shown in FIG. 9 may be applied to a cell handover scenario. The first network device may perform the communication method shown in FIG. 9, to determine a target cell from a plurality of candidate target cells having same first identification information, so that a terminal device may be handed over from a currently accessed source cell (also referred to as a serving cell) to the target cell. The first network device may be a network device corresponding to the source cell. For example, the first network device may be a serving base station (which may be referred to as a source base station) of the source cell.

As shown in FIG. 9, the communication method includes steps S901 to S903.

S901: The first network device obtains location information associated with the terminal device and respective area information of the plurality of candidate target cells, where the plurality of candidate target cells have the same first identification information.

In S901, for definitions of the candidate target cell and the first identification information, and how the first network device determines the candidate target cell, refer to the foregoing descriptions of S501. Details are not described herein again.

In S901, the area information of the candidate target cell may indicate a coverage area of the candidate target cell. For details, refer to the foregoing descriptions of the area information of the candidate target cell in S501. Details are not described herein again.

In S901, for the location information associated with the terminal device and how the first network device obtains the location information associated with the terminal device, refer to the foregoing descriptions of S701. Details are not described herein again.

How the first network device obtains the respective area information of the plurality of candidate target cells is not limited in this embodiment of this application. For example, the first network device may obtain the respective area information of the plurality of candidate target cells from another network device. For example, the first network device may receive the area information of the candidate target cell sent by a neighboring network device, or the first network device may receive the area information of the candidate target cell sent by a network device corresponding to the candidate target cell. For another example, the first network device may obtain the respective area information of the plurality of candidate target cells from an OAM network element.

S902: The first network device determines the target cell based on the location information associated with the terminal device and the respective area information of the plurality of candidate target cells. The target cell belongs to the plurality of candidate target cells, and the terminal device is located in a coverage area of the target cell.

In S902, the first network device determines, based on the location information associated with the terminal device and the respective area information of the plurality of candidate target cells, whether the terminal device is located in a coverage area of the candidate target cell. If it is determined that the terminal device is located in the coverage area of the candidate target cell, it is considered that the candidate target cell is the target cell. If it is determined that the terminal device is not located in the coverage area of the candidate target cell, it is considered that the candidate cell is not the target cell.

Optionally, after the target cell is determined, the first network device may further send a handover request message to the target cell. Further, after receiving the handover request message, the target cell may send a handover request acknowledgment message to the first network device. The handover request acknowledgment message may include a handover configuration corresponding to the target cell.

S903: The first network device sends a first message to the terminal device, where the first message includes the handover configuration corresponding to the target cell. Correspondingly, after receiving the first message, the terminal device may apply the handover configuration corresponding to the target cell in the first message to perform handover to the target cell.

For details of S903, refer to the foregoing descriptions of S704. Details are not described herein again.

FIG. 10 shows another communication method according to an embodiment of this application. In FIG. 10, an example in which a first network device and a third network device are used as execution bodies of an interaction example is used to describe the method. However, the execution bodies of the interaction example are not limited in this application. For example, the first network device in FIG. 10 may alternatively be a module used in the first network device, for example, a chip, a chip system, or a processor, or may be a logical node, a logical module, or software that can implement all or some functions of the first network device. The third network device in FIG. 10 may alternatively be a module used in the third network device, for example, a chip, a chip system, or a processor, or may be a logical node, a logical module, or software that can implement all or some functions of the third network device.

Based on the communication method shown in FIG. 10, a neighboring cell relationship may be transferred between network devices, or a neighboring cell relationship may be collected by using a network device, to resolve a problem that in a scenario in which the neighboring cell relationship cannot be manually configured, a network device cannot successfully complete cell handover due to lack of the neighboring cell relationship. For example, if the communication method shown in FIG. 10 is applied to an NTN network, the first network device and/or the third network device may be regenerative satellites/a regenerative satellite in the sky. For another example, the first network device may be a network device in an NTN network, for example, a satellite, and the third network device may be a network device in a TN network, for example, a terrestrial base station.

As shown in FIG. 10, the communication method includes steps S1001 and S1002.

S1001: The first network device obtains the neighboring cell relationship, where the neighboring cell relationship includes first identification information and second identification information of a first cell, and first location information, and the first location information includes at least one of area information of the first cell and location information of a terminal device located in a coverage area of the first cell.

The first cell is not limited in this embodiment of this application. The first cell may be any cell, for example, may be a neighboring cell of a serving cell of the first network device. In this embodiment of this application, a serving cell of a network device may also be referred to as a cell served or managed by the network device or a cell of the network device.

For details of the first identification information and the second identification information of the first cell, refer to the foregoing descriptions. Details are not described herein again.

The first location information may include the area information of the first cell and/or the location information of the terminal device. The area information of the first cell may indicate a coverage area of the first cell. For details, refer to the foregoing descriptions of the area information of the candidate target cell. Details are not described herein again.

The location information of the terminal device may indicate a geographical location of the terminal device. For example, the location information of the terminal device may be longitude and latitude information. For details of the location information of the terminal device, refer to the foregoing descriptions of the location information associated with the terminal device in S701. For example, refer to the foregoing descriptions of the area information of the beam in which the terminal device is located, the information about the geographical area in which the terminal device is located, and the location information of the terminal device. Details are not described herein again.

Optionally, the neighboring cell relationship may further include an identifier of a network device to which the first cell belongs, for example, a base station identifier of a base station to which the first cell belongs.

Optionally, the neighboring cell relationship may further include one or more of the following: frequency information of the first cell, a subcarrier spacing of the first cell, an SSB measurement timing configuration (SSB measurement timing configuration, SMTC) of the first cell, and other information.

In this embodiment of this application, information about the first cell stored in the neighboring cell relationship, for example, the first identification information, the second identification information, the first location information, the identifier of the network device in which the first cell belongs, the frequency information of the first cell, and other information, may be collectively referred to as related information of the first cell. Optionally, the neighboring cell relationship may include related information of one or more first cells.

A manner in which the first network device obtains the neighboring cell relationship is not limited in this embodiment of this application. The following describes several possible manners of obtaining the neighboring cell relationship.

Manner 1: The first network device receives the first identification information and the second identification information of the first cell that are reported by the terminal device, and the location information of the terminal device present when the first cell is measured. In this manner, the first cell is a cell measured by the terminal device. When measuring the first cell, the terminal device obtains the first identification information and the second identification information of the first cell. The terminal device may store the first identification information and the second identification information of the first cell, and the location information of the terminal device present when the first cell is measured, and report the first identification information, the second identification information, and the location information to the first network device. It may be understood that the terminal device may measure the first cell, which means that the terminal device is located in the coverage area of the first cell.

Optionally, in this manner, the terminal device may further report other information of the first cell, for example, the frequency information of the first cell.

It should be noted that, in this embodiment of this application, a specific procedure used by the terminal device to measure the first cell is not limited, and a specific procedure used by the terminal device to report the information about the first cell and the location information of the terminal device is not limited. For example, the terminal device may measure the first cell based on a CGI measurement procedure, and report, by using a CGI measurement report, the first identification information and the second identification information of the first cell, and the location information of the terminal device present when the first cell is measured. For another example, the terminal device may periodically measure the first cell. For another example, the terminal device may measure the first cell in a cell handover procedure, and report, by using a measurement report, the first identification information and the second identification information of the first cell, and the location information of the terminal device present when the first cell is measured. For another example, when accessing the first network device, the terminal device may report the first identification information and the second identification information of the first cell previously measured, and the location information of the terminal device present when the first cell is measured. For another example, the terminal device measures a frequency in an idle state or an inactive state, and measures the second identification information of the first cell. When the terminal device accesses the first cell, that is, enters a connected state, the terminal device reports a first identifier and a second identifier of the measured first cell, and the location information of the terminal device to the network device to which the first cell belongs. For another example, a network device (for example, the first network device, or the network device to which the first cell belongs, and the network device is not limited in this embodiment of this application) indicates, in a system message, a frequency that needs to be measured by the terminal device in the idle state or the inactive state, indicates the terminal device to measure related information of a neighboring cell (that is, the first cell) at the frequency, and indicates the terminal device to report the obtained related information of the first cell to the network device after entering the connected state.

Manner 2: The first network device receives handover acknowledgment information corresponding to the first cell, where the handover acknowledgment information includes the area information, the first identification information, and/or the second identification information of the first cell.

In this manner, the first cell may be a target cell in a cell handover procedure, and the first network device may be a network device corresponding to a source cell, for example, may be a source base station. In the cell handover procedure, a network device corresponding to the first cell may include at least one of the area information, the first identification information, or the second identification information of the first cell in the handover request acknowledgment message, and send the handover request acknowledgment message to the first network device.

Optionally, in this manner, the handover request acknowledgment message may further include other information of the first cell, for example, the frequency information of the first cell.

Optionally, in this manner, the handover request acknowledgment message may further include information about a neighboring cell of the first cell, for example, may include at least one of area information, first identification information, second identification information, or frequency information of the neighboring cell. For example, it is assumed that the first cell is a cell A, and a cell B and a cell C exist near the cell A. In a cell handover procedure, a handover request acknowledgment message sent by a network device corresponding to the cell A to the first network device may include area information of the cell A, frequency information, a PCI, and a CGI of the cell B, and frequency information, a PCI, and a CGI of the cell C.

Optionally, the first network device may estimate a coverage area of the neighboring cell of the first cell by using the coverage area of the first cell as a reference. For example, the coverage area of the first cell externally extended by 1 kilometer is an estimated possible coverage area of the neighboring cell of the first cell.

Manner 3: The first network device receives the neighboring cell relationship from a second network device. The second network device is another network device different from the first network device. The second network device is not specifically limited in this embodiment of this application. For example, the second network device may be a network device adjacent to the first network device. For another example, if the first network device and the second network device are network devices in the NTN network, the second network device may be a previous network device that serves a current service area of the first network device. For example, for a current service area 1 of the first network device, the second network device is a previous network device of the service area 1.

S1002: The first network device sends the neighboring cell relationship to a third network device.

The third network device is another network device different from the first network device. The third network device is not specifically limited in this embodiment of this application. For example, the third network device may be a network device adjacent to the first network device. For another example, if the first network device and the third network device are network devices in the NTN network, the third network device may be a next network device that serves the current service area of the first network device.

S1002 is optional.

Optionally, if the first network device and the third network device are network devices in the NTN network, for example, the first network device and the second network device are regenerative satellites, the neighboring cell relationship may be transferred between the first network device and the third network device over an inter-satellite link.

Optionally, the first network device may periodically send the neighboring cell relationship to another network device.

Optionally, the neighboring cell relationship may be transferred between the first network device and the third network device over an XN link. For example, the first network device may send the neighboring cell relationship to the third network device by using an XN configuration update procedure.

Optionally, the first network device may send an updated neighboring cell relationship to the third network device when information in the stored neighboring cell relationship changes (in other words, when the neighboring cell relationship is updated). In this case, the first network device may send, to the third network device, only information that is in the updated neighboring cell relationship and that changes compared with the original neighboring cell relationship, and does not need to send information that does not change. Alternatively, the network device may send, to the third network device, all information included in the updated neighboring cell relationship.

It should be noted that a time sequence relationship between S1001 and S1002 is not limited in this embodiment of this application. S1001 may occur before S1002. For example, after obtaining the neighboring cell relationship, the first network device sends the neighboring cell relationship to the third network device. Alternatively, S1002 may occur before S1001. For example, the first network device sends a neighboring cell relationship 1 (where the neighboring cell relationship 1 may be preconfigured, or may be obtained in any manner in S1001) to the third network device, and then obtains a new neighboring cell relationship 2. Alternatively, S1001 and S1002 may occur simultaneously.

Optionally, the neighboring cell relationship obtained by the first network device may be used for cell handover, or may be used for neighboring frequency delivery during reselection, redirection, or the like. For example, if the neighboring cell relationship obtained by the first network device is used for cell handover, the measurement report reported by the terminal device may include the location information of the terminal device and the information about the measured neighboring cell (for example, the second identification information and/or the frequency information of the neighboring cell). After receiving the measurement report, the first network device may query the neighboring cell relationship based on the location information of the terminal device and the information about the neighboring cell that are included in the measurement report, to determine the target cell. In this way, the terminal device may be handed over to the target cell.

For example, the measurement report reported by the terminal device may include the location information of the terminal device and the PCI of the measured neighboring cell. The first network device may query the neighboring cell relationship based on the location information of the terminal device and the PCI of the neighboring cell, and find a CGI of a corresponding cell, to determine a unique target cell.

Optionally, the embodiment shown in FIG. 10 may be applied in combination with the embodiment shown in FIG. 9. For example, the first network device may determine, based on the neighboring cell relationship and the location information associated with the terminal device, a specific candidate target cell with a coverage area in which the terminal device is located, to determine the target cell. If the terminal device is located in a coverage area of a candidate target cell, it may be considered that the candidate target cell is the target cell. If the terminal device is not located in a coverage area of a candidate target cell, it may be considered that the candidate target cell is not the target cell.

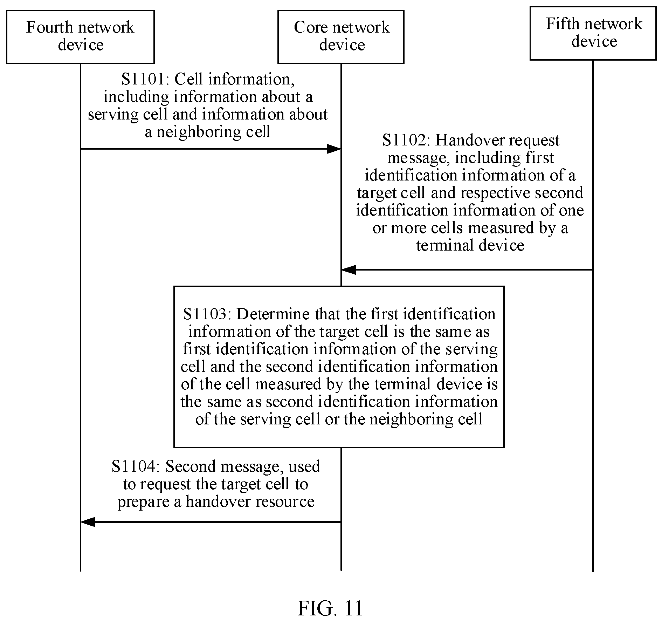

FIG. 11 shows another communication method according to an embodiment of this application. In FIG. 11, an example in which a core network device, a fourth network device, a fifth network device are used as execution bodies of an interaction example is used to describe the method. However, the execution bodies of the interaction example are not limited in this application. For example, the core network device in FIG. 11 may alternatively be a module used in the core network device, for example, a chip, a chip system, or a processor, or may be a logical node, a logical module, or software that can implement all or some functions of the core network device. The fourth network device in FIG. 11 may alternatively be a module used in the fourth network device, for example, a chip, a chip system, or a processor, or may be a logical node, a logical module, or software that can implement all or some functions of the fourth network device. The fifth network device in FIG. 11 may alternatively be a module used in the fifth network device, for example, a chip, a chip system, or a processor, or may be a logical node, a logical module, or software that can implement all or some functions of the fifth network device.

Based on the communication method shown in FIG. 11, the core network device may determine a target cell based on cell information, to resolve a problem that in a scenario in which a network device has no neighboring cell relationship, the network device cannot determine the target cell and therefore cannot complete cell handover. For example, the fourth network device may be a network device in a TN network, and the fifth network device may be a network device in an NTN network.

As shown in FIG. 11, the communication method includes steps S1101 to S1104.

S1101: The fourth network device sends the cell information to the core network device. Correspondingly, the core network device receives the cell information from the fourth network device. The cell information includes information about a serving cell of the fourth network device. Optionally, the cell information may further include information about a cell (which may be referred to as a neighboring cell for short) of a neighboring network device. The information about the serving cell includes first identification information and second identification information of the serving cell, and the information about the neighboring cell includes second identification information of the neighboring cell.

For details of the first identification information and the second identification information, refer to the foregoing descriptions. Details are not described herein again.

Optionally, the cell information may further include other information of the serving cell and/or other information of the neighboring cell. For example, the cell information may further include at least one of frequency information of the serving cell, first identification information of the neighboring cell, or frequency information of the neighboring cell. For another example, the cell information may further include information such as a tracking area code (tracking area code, TAC) of a tracking area to which the serving cell and/or the neighboring cell belong/belongs, and a public land mobile network (Public Land Mobile Network, PLMN) to which the serving cell and/or the neighboring cell belong/belongs.

Optionally, the fourth network device may send the cell information to the core network device through an NG interface.

Optionally, the core network device may further receive cell information from another network device, where the cell information includes information about a serving cell and information about a neighboring cell of the another network device. For details, refer to the foregoing descriptions. Details are not described herein again.

Optionally, the core network may obtain a device identifier of the fourth network device. For example, the fourth network device may send the device identifier of the fourth network device to the core network device.

S1102: The fifth network device sends a handover request message to the core network device. Correspondingly, the core network device receives the handover request message from the fifth network device. The handover request message includes first identification information of the target cell and respective second identification information of one or more cells measured by a terminal device. The handover request message is used to request the target cell to prepare a handover resource.

The cell measured by the terminal device may be the target cell, or the cell measured by the terminal device may be a neighboring cell of the target cell, or a distance between the cell measured by the terminal device and the target cell is not extremely long, so that the core network device can determine, based on the first identification information of the target cell and the second identification information of the cell measured by the terminal device, a network device serving the target cell. Details are described in S1103 below.

Before S1102, the fifth network device determines the target cell, and obtains the first identification information of the target cell and the second identification information of the cell measured by the terminal device.

For example, the second identification information is a CGI. In a possible implementation, before the fifth network device determines that the terminal device needs to be handed over from a current cell to the target cell, the fifth network device may deliver a CGI measurement configuration based on a PCI corresponding to the cell measured by the terminal device, and therefore may obtain a CGI of the cell measured by the terminal device based on a CGI measurement procedure. For example, when signal quality of a neighboring cell #1 of the terminal device is higher than signal quality of the serving cell of the terminal device by a threshold 1, the fifth network device triggers the terminal device to measure a CGI of the neighboring cell #1. When signal quality of a neighboring cell #2 of the terminal device is higher than the signal quality of the serving cell of the terminal device by a threshold 2 (where the threshold 2 is greater than the threshold 1), the fifth network device determines the neighboring cell #2 as the target cell. For another example, after the terminal device accesses the fifth network device, the fifth network device may deliver a CGI measurement configuration to the terminal device. After receiving the CGI measurement configuration, the terminal device obtains the CGI of the neighboring cell (that is, the CGI of the cell measured by the terminal device), and reports the CGI of the neighboring cell to the fifth network device by using a CGI measurement report. The fifth network device obtains, based on the CGI measurement report, the CGI of the cell measured by the terminal device.

For example, the first identification information is a PCI. In a possible implementation, the fifth network device may determine the target cell and the PCI of the target cell based on a measurement procedure of the terminal device. In this implementation, the fifth network device may be a serving base station of a source cell currently accessed by the terminal device, that is, a source base station. The terminal device measures the neighboring cell, obtains the PCI of the neighboring cell, and reports the PCI to the fifth network device by using the measurement report. After receiving the measurement report, the fifth network device selects a neighboring cell as the target cell, and correspondingly obtains the PCI of the target cell. Optionally, the measurement report may further include other information of the neighboring cell, for example, information such as frequency information.

It should be noted that a manner in which the fifth network device obtains the first identification information of the target cell and the second identification information of the cell measured by the terminal device is not limited in this embodiment of this application. In addition to the implementation described above, the fifth network device may alternatively obtain, in another manner, the first identification information of the target cell and the second identification information of the cell measured by the terminal device.

S1103: The core network device determines, based on the handover request message, that the first identification information of the target cell is the same as the first identification information of the serving cell of the fourth network device and the second identification information of the cell measured by the terminal device is the same as the second identification information of the serving cell or the neighboring cell of the fourth network device.

For example, the core network device may determine, based on the cell information obtained in S1101, that the first identification information of the target cell is the same as the first identification information of the serving cell of the fourth network device and the second identification information of the cell measured by the terminal device is the same as the second identification information of the serving cell or the neighboring cell of the fourth network device.

It should be noted that the core network devices in S1101, S1102, and S1103 may be a same device, or may be different devices. For example, the core network device in S1101 and S1103 may be a core network device connected to the fourth network device, and the core network device in S1102 may be a core network device connected to the fifth network device. The two core network devices may communicate with each other.

In S1103, if the core network device determines that the first identification information of the target cell is the same as the first identification information of the serving cell of the fourth network device, it indicates that the serving cell of the fourth network device may be the target cell. If the core network device further determines that the second identification information of the cell measured by the terminal device is the same as the second identification information of the serving cell of the fourth network device, it indicates that the serving cell of the fourth network device is a neighboring cell of the source cell currently accessed by the terminal device. Therefore, it may be considered that the serving cell of the fourth network device is a unique target cell.

In S1103, if the core network device determines that the first identification information of the target cell is the same as the first identification information of the serving cell of the fourth network device, it indicates that the serving cell of the fourth network device may be the target cell. If the core network device further determines that the second identification information of the cell measured by the terminal device is the same as the second identification information of the neighboring cell of the serving cell, it indicates that the neighboring cell of the serving cell of the fourth network device is a neighboring cell of the source cell currently accessed by the terminal device. In this case, it may be considered that the serving cell of the fourth network device is also a neighboring cell of the source cell currently accessed by the terminal device. Therefore, it may be considered that the serving cell of the fourth network device is a unique target cell.

Optionally, a frequency of the serving cell of the fourth network device may be the same as a frequency of the target cell. In other words, if the core network device determines, based on the cell information and the handover request message, that the serving cell and the target cell have the same first identification information and frequency and the second identification information of the cell measured by the terminal device is the same as the second identification information of the serving cell or the neighboring cell, the core network device determines that the serving cell is the target cell to which the terminal device requests handover.

Optionally, the handover request message may further include identification information of a sixth network device. The sixth network device is not limited in this embodiment of this application. The sixth network device may be any network device determined by the fifth network device. For example, the sixth network device may be or may not be the fourth network device. Further, the core network device may ignore the identification information of the sixth network device in the handover request message, and still determine the target cell based on the cell information.

S1104: The core network device determines that the target cell belongs to the fourth network device (that is, the target cell is a serving cell of the fourth network device), and sends a second message to the fourth network device, where the second message is used to request the target cell to prepare the handover resource.

Correspondingly, after receiving the second message, the fourth network device prepares the handover resource for access of the terminal device.

Optionally, after receiving the second message, the fourth network device may send a handover request acknowledgment message to the core network device, to indicate that access of the terminal device is allowed.

Further, after receiving the handover request acknowledgment message from the fourth network device, the core network device may send a first message to the terminal device via the fifth network device, where the first message includes a handover configuration of the target cell. After receiving the first message, the terminal device may be handed over to the target cell based on the handover configuration. A possible implementation of sending the first message to the terminal device via the fifth network device is as follows: After receiving the handover request acknowledgment message from the fourth network device, the core network device sends, to the fifth network device, a handover acknowledgment command indicating that the target cell agrees to the handover. After receiving the handover acknowledgment command, the fifth network device sends the first message (for example, the handover acknowledgment command includes the first message) to the terminal device, where both the handover acknowledgment command and the first message include the handover configuration of the target cell. The handover acknowledgment command is used to trigger the fifth network device to send the first message to the terminal device. The handover acknowledgment command may indicate that the fourth network device allows access of the terminal device, or the target cell allows access of the terminal device, or the target cell has prepared the handover resource, or the like. A specific meaning of the handover acknowledgment command is not limited in this embodiment of this application.

For example, the second message may be a handover request (Handover Request) message.

For example, the first message may be an RRC reconfiguration message. In other words, the fifth network device triggers, by using the RRC reconfiguration message, the terminal device to perform handover to the target cell.

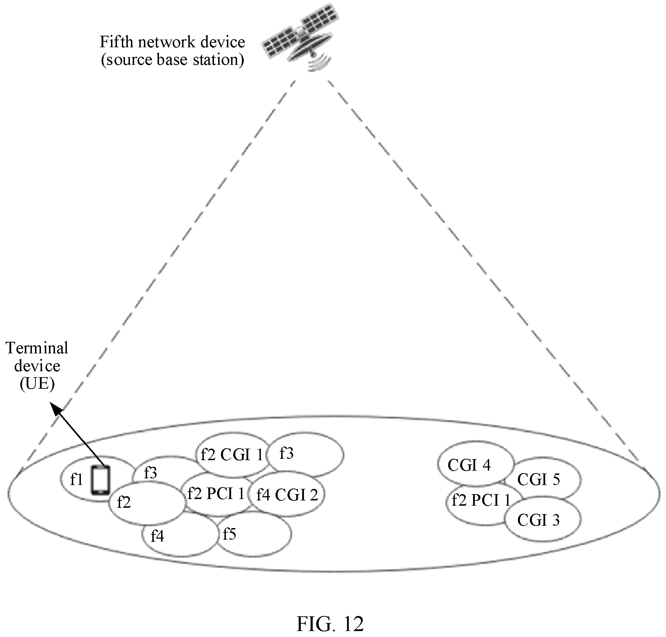

For example, it is assumed that in the communication method shown in FIG. 11, the fourth network device is a network device in the TN network. The serving cell of the fourth network device is a TN cell. The fifth network device is a network device in the NTN network. The first identification information is a PCI, and the second identification information is a CGI. FIG. 12 is a diagram of a possible application scenario. As shown in FIG. 12, a coverage area of an NTN cell currently served by a fifth network device includes a plurality of TN cells. In the plurality of TN cells, PCIs of two TN cells are 1 and frequencies of the two TN cells are f2. A cell whose PCI is 1 on the left is a serving cell of a fourth network device, and a neighboring cell whose CGI is 1 and a neighboring cell whose CGI is 2 exist near the cell. A neighboring cell whose CGI is 3, a neighboring cell whose CGI is 4, and a neighboring cell whose CGI is 15 exist near a cell whose PCI is 1 on the right. Therefore, when a specific cell cannot be determined from the two cells based on the PCI being 1, the cell whose PCI is 1 on the left or the cell whose PCI is 1 on the right may be determined based on a CGI of a neighboring cell around the two cells.

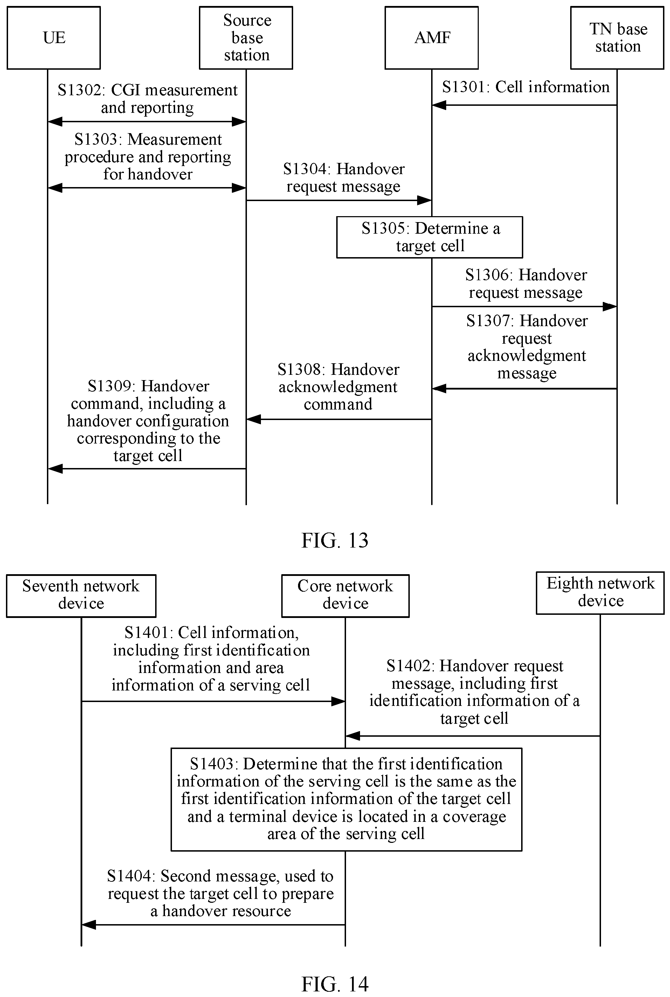

Further, with reference to the application scenario shown in FIG. 12, the following describes a possible procedure of the embodiment in which the core network device determines the target cell based on the cell information. For example, the fourth network device may be a TN base station. The terminal device may be UE. The fifth network device may be a base station of an NTN cell currently accessed by the UE, that is, a source base station. The core network device may be an AMF network element. As shown in FIG. 13, the possible procedure of the embodiment may include the following steps.

S1301: The TN base station sends cell information to the AMF network element.

The cell information stored by the TN base station includes a CGI and a PCI of a serving cell and a CGI of a neighboring cell of the serving cell. The TN base station may send the stored cell information to the AMF network element. For example, in the application scenario shown in FIG. 12, the serving cell may be a cell whose PCI is 1 on the left.

S1302: The source base station and the UE perform CGI measurement and reporting.

When the UE accesses the source base station, the source base station delivers a CGI measurement procedure. The UE reports the CGI of the measured cell to the source base station. For example, in the application scenario shown in FIG. 12, a location of the UE is near the cell whose PCI is 1 on the left. Therefore, the UE may measure a CGI of the cell whose PCI is 1 on the left and a CGI of a neighboring cell near the cell, and report the measured CGIs to the fifth network device.

S1303: The source base station and the UE perform a measurement procedure and reporting for handover.

The source base station delivers a to-be-measured frequency. After performing measurement based on the to-be-measured frequency, the UE reports a measurement report to the source base station. The measurement report includes the PCI of the cell measured by the UE. The source base station may select a cell as a target cell based on the measurement report.

For example, in the application scenario shown in FIG. 12, the UE may measure the PCI of the cell whose PCI is 1 on the left and a PCI of a neighboring cell near the cell, and report the PCIs to the source base station by using a measurement report. The source base station selects the cell whose PCI is 1 on the left as a target cell from the cells measured by the UE.

S1304: The source base station sends a handover request message to the AMF network element. The handover request message includes the PCI of the target cell and the CGI of the cell measured by the UE.

For example, in the application scenario shown in FIG. 12, the handover request message sent by the source base station may include the PCI of the target cell (that is, the cell whose PCI is 1 on the left), and CGIs of neighboring cells measured by the UE (that is, CGIs of neighboring cells near the cell whose PCI is 1 on the left: a CGI 1 and a CGI 2).

S 1305: The AMF network element determines the target cell.

The AMF network element may match the PCI of the target cell sent by the AMF network element and the CGI of the cell measured by the UE with the cell information, to determine that the target cell is a serving cell of the TN base station. In other words, the TN base station is a target base station.

For example, in the application scenario shown in FIG. 12, the AMF network element obtains the cell information sent by the TN base station, and knows the PCI and the CGI of the cell whose PCI is 1 on the left, and the CGI of the neighboring cell near the cell whose PCI is 1 on the left. Therefore, the AMF network element may determine, based on the PCI of the target cell (that is, the cell whose PCI is 1 on the left) and the CGIs of the neighboring cells measured by the UE (that is, the CGIs of the neighboring cells near the cell whose PCI is 1 on the left: the CGI 1 and the CGI 2) that are sent by the source base station, that the target cell is the cell whose PCI is 1 on the left.

S 1306: The AMF network element sends a handover request message to the TN base station.

S1307: The TN base station sends a handover request acknowledgment message to the AMF network element, where the handover request acknowledgment message includes a handover configuration corresponding to the target cell.

S1308: The AMF network element sends a handover acknowledgment command to the source base station.

S1309: The source base station sends a handover command to the UE, where the handover command includes the handover configuration corresponding to the target cell.

For details of S1306 to S1309, refer to the foregoing descriptions of S1104. Details are not described herein again.

FIG. 14 shows another communication method according to an embodiment of this application. In FIG. 14, an example in which a core network device, a seventh network device, and an eighth network device are used as execution bodies of an interaction example is used to describe the method. However, the execution bodies of the interaction example are not limited in this application. For example, the core network device in FIG. 14 may alternatively be a module used in the core network device, for example, a chip, a chip system, or a processor, or may be a logical node, a logical module, or software that can implement all or some functions of the core network device. The seventh network device in FIG. 14 may alternatively be a module used in the seventh network device, for example, a chip, a chip system, or a processor, or may be a logical node, a logical module, or software that can implement all or some functions of the seventh network device. The eighth network device in FIG. 14 may alternatively be a module used in the eighth network device, for example, a chip, a chip system, or a processor, or may be a logical node, a logical module, or software that can implement all or some functions of the eighth network device.

Based on the communication method shown in FIG. 14, the core network device may determine a target cell based on area information of a cell and location information of a terminal device, to resolve a problem that in a scenario in which a network device has no neighboring cell relationship, the network device cannot determine the target cell and therefore cannot complete cell handover. For example, the seventh network device may be a network device in a TN network, and the eighth network device may be a network device in an NTN network.

As shown in FIG. 14, the communication method includes steps S1401 to S1404.

S1401: The seventh network device sends cell information to the core network device. Correspondingly, the core network device receives the cell information from the seventh network device. The cell information includes first identification information and area information of a serving cell of the seventh network device.

For details of the first identification information, refer to the foregoing descriptions. Details are not described herein again.

The area information of the serving cell may indicate a coverage area of the serving cell. For details, refer to the foregoing descriptions of the area information of the candidate target cell. Details are not described herein again.

Optionally, the cell information may further include other information of the serving cell, for example, at least one of second identification information or frequency information of the serving cell.

Optionally, the cell information may further include information about a neighboring cell of the serving cell, for example, at least one of first identification information, second identification information, frequency information, or area information of the neighboring cell of the serving cell.

Optionally, the seventh network device may send the cell information to the core network device through an NG interface.

Optionally, the core network device may further receive cell information from another network device, where the cell information includes information about a serving cell of the another network device. For details, refer to the foregoing descriptions. Details are not described herein again.

Optionally, if the seventh network device serves a plurality of cells (in other words, the seventh network device has a plurality of serving cells), the area information in the cell information may be shared by all serving cells of the seventh network device. For example, the area information may indicate a coverage area of the seventh network device.

S1402: The eighth network device sends a handover request message to the core network device. Correspondingly, the core network device receives the handover request message from the eighth network device. The handover request message includes first identification information of a target cell to which the terminal device requests handover.

Before S1402, the eighth network device obtains the first identification information of the target cell.

For example, the first identification information is a PCI. In a possible implementation, the eighth network device may obtain the PCI of the target cell based on a cell handover procedure. In this implementation, the eighth network device may be a serving base station of a source cell currently accessed by the terminal device, that is, a source base station. The terminal device measures the neighboring cell, obtains the PCI of the neighboring cell, and reports the PCI to the eighth network device by using a measurement report. After receiving the measurement report, the eighth network device selects a neighboring cell as the target cell, and correspondingly obtains the PCI of the target cell. Optionally, the measurement report may further include other information of the neighboring cell, for example, information such as frequency information.

It should be noted that a manner in which the eighth network device obtains the first identification information of the target cell is not limited in this embodiment of this application. In addition to the implementation described above, the eighth network device may alternatively obtain the first identification information of the target cell in another manner.

Optionally, the handover request message may further include the location information of the terminal device. For details of the location information of the terminal device and how the eighth network device obtains the location information of the terminal device, refer to the foregoing descriptions. Details are not described herein again.

S1403: If the core network device determines, based on the cell information and the location information of the terminal device, that the first identification information of the serving cell of the seventh network device is the same as the first identification information of the target cell and the terminal device is located in the coverage area of the serving cell of the seventh network device, the core network device determines that the serving cell is the target cell to which the terminal device requests handover, or determines that a network device corresponding to the target cell is the seventh network device.

A manner in which the core network device obtains the location information of the terminal device is not limited in this embodiment of this application. For example, the location information of the terminal device may be reported by the terminal device to the core network device. For example, the terminal device reports the location information of the terminal device to a location client function (location client function, LCF) network element of a core network, and the LCF network element sends the location information of the terminal device to an AMF network element. Alternatively, the location information of the terminal device may be sent by the eighth network device to the core network device. For example, the location information of the terminal device may be carried in the handover request message.

Optionally, a frequency of the serving cell may be the same as a frequency of the target cell. In other words, if the core network device determines, based on the cell information and the location information of the terminal device, that the serving cell and the target cell have the same first identification information and frequency and the terminal device is located in the coverage area of the serving cell, the core network device determines that the serving cell is the target cell to which the terminal device requests handover.

Optionally, if the cell information includes the second identification information of the serving cell, the core network device may further determine second identification information of the target cell based on the cell information.

Optionally, the handover request message may further include identification information of a ninth network device. The ninth network device is not limited in this embodiment of this application. The ninth network device may be any network device determined by the eighth network device. For example, the ninth network device may be or may not be the seventh network device. Further, the core network device may ignore the identification information of the ninth network device in the handover request message, and still determine the target cell based on the cell information.

S1404: The core network device determines that the target cell belongs to the seventh network device (that is, the target cell is a serving cell of the seventh network device), and the core network device sends a second message to the seventh network device, where the second message is used to request the target cell to prepare a handover resource.

Correspondingly, after receiving the second message, the seventh network device prepares the handover resource for access of the terminal device.

Optionally, after receiving the second message, the seventh network device may send a handover request acknowledgment message to the core network device, to indicate that access of the terminal device is allowed.

Further, after receiving the handover request acknowledgment message from the seventh network device, the core network device may send a first message (for example, the handover request acknowledgment message includes the first message) to the terminal device via the eighth network device, where the first message includes a handover configuration of the target cell. After receiving the first message, the terminal device may be handed over to the target cell based on the handover configuration.

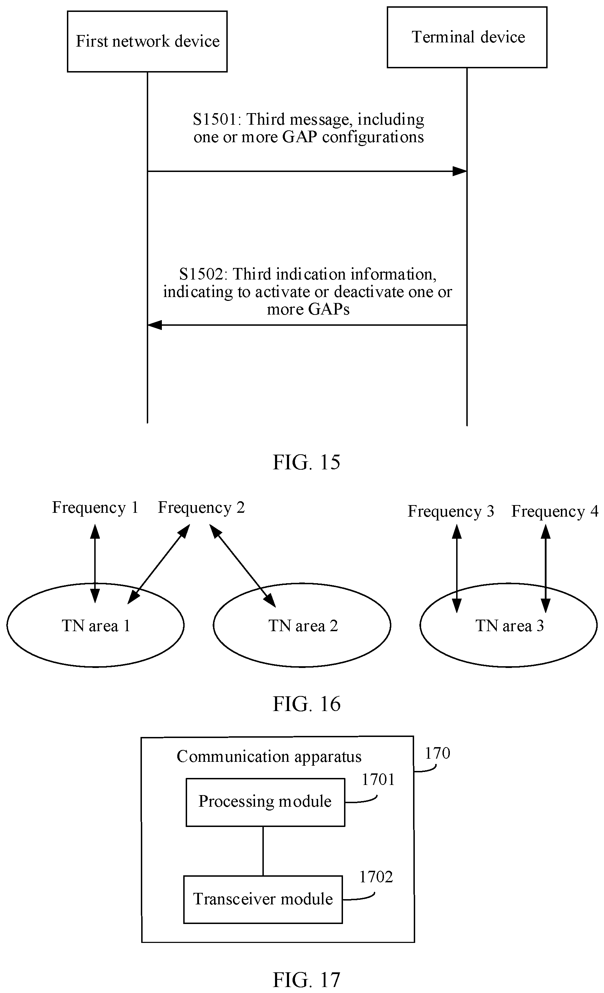

FIG. 15 shows another communication method according to an embodiment of this application. In FIG. 15, an example in which a first network device and a terminal are used as execution bodies of an interaction example is used to describe the method. However, the execution bodies of the interaction example are not limited in this application. For example, the first network device in FIG. 15 may alternatively be a module used in the first network device, for example, a chip, a chip system, or a processor, or may be a logical node, a logical module, or software that can implement all or some functions of the network device. The terminal device in FIG. 15 may alternatively be a module used in the terminal device, for example, a chip, a chip system, or a processor, or may be a logical node, a logical module, or software that can implement all or some functions of the terminal.

The communication method shown in FIG. 15 may be applied to a cell handover scenario. In a cell handover scenario, if the terminal device determines to deactivate (in this specification, deactivation may also be referred to as disabling, and similarly, activation may also be referred to as enabling) a measurement gap (GAP) in a measurement configuration, but a network device still activates the GAP, a GAP status of the terminal device is inconsistent with that of the network device. Based on this problem, the first network device and the terminal device may perform the communication method shown in FIG. 15, to align a deactivated/activated GAP, so as to increase a data transmission amount and reduce GAP scheduling overheads. The first network device may be a network device corresponding to a source cell currently accessed by the terminal device. For example, the first network device may be a serving base station (also referred to as a source base station) of the source cell.

As shown in FIG. 15, the communication method includes steps S1501 and S1502.

S1501: The first network device sends a third message to the terminal device. Correspondingly, the terminal device receives the third message. The third message includes one or more GAP configurations.

S1502: The terminal device sends third indication information to the first network device. Correspondingly, the first network device receives the third indication information. The third indication information indicates to activate or deactivate one or more of one or more GAPs. In other words, the activated or deactivated GAP indicated by the third indication information may be all GAPs included in the third message, or may be a part of GAPs included in the third message.

Optionally, one piece of third indication information may indicate to activate/deactivate a GAP. In other words, if a plurality of GAPs are activated/deactivated, the terminal device needs to send a plurality of pieces of third indication information. Alternatively, one piece of third indication information may indicate all GAPs that need to be activated/deactivated.

How the terminal device determines the activated or deactivated GAP is not limited in this embodiment of this application. The following describes a possible manner of determining the activated or deactivated GAP.

It should be noted that, due to movement of the network device or movement of the terminal device, the first network devices in S1501 and S1502 may be a same network device or different network devices.

In a possible implementation, the third message may further include information about one or more frequencies associated with the one or more GAPs, or the third message may further include information about one or more frequency bands associated with the one or more GAPs. The one or more frequencies may be frequencies configured by the first network device for the terminal device to perform measurement, that is, frequencies of to-be-measured cells, and may also be referred to as measurement objects. One GAP may be associated with one or more frequencies. The one or more frequency bands may be frequency bands corresponding to frequencies configured by the first network device for the terminal device to perform measurement, that is, frequency bands of frequencies of to-be-measured cells. Because one frequency belongs to one frequency band, one or more frequencies associated with a GAP may also be referred to as one or more frequency bands associated with a GAP in the following descriptions. Information about an area associated with the frequency may also be referred to as information about an area associated with the frequency band.

In this implementation, the terminal device may determine whether one or more frequencies need to be measured, and determine, based on whether the frequency needs to be measured, whether to activate or deactivate a GAP associated with the frequency. For example, if the terminal device determines that one or more frequencies associated with a GAP need to be measured, the terminal device determines to activate the GAP. If the terminal device determines that all frequencies associated with a GAP do not need to be measured, the terminal device determines to deactivate the GAP.

Optionally, in this implementation, the terminal device may determine, based on the information about the area associated with the frequency, whether to measure the frequency. In this optional solution, the first network device may send, to the terminal device, the information about the area associated with the frequency (which may include a frequency associated with the GAP configuration in the third message, and optionally, may further include another frequency). The information about the area associated with the frequency indicates a geographical location of the area associated with the frequency. It should be noted that a specific form of the information about the area associated with the frequency is not limited in this embodiment of this application. For example, if the area associated with the frequency is circular, the information about the area associated with the frequency may include information indicating a geographical location of a center point and information indicating a radius. For another example, the information about the area associated with the frequency may indicate a boundary line of the area associated with the frequency.

For example, as shown in FIG. 16, it is assumed that the first network device is an NTN network device, and the first network device sends information about four frequencies and three TN areas to the terminal device. The four frequencies are respectively F1, F2, F3, and F4, and the three TN areas are respectively a TN area 1, a TN area 2, and a TN area 3. The frequency F1 is associated with the TN area 1, the frequency F2 is associated with the TN area 1 and the TN area 2, and the frequency F3 and the frequency F4 are associated with the TN area 3. In this case, when the terminal device is in an area range of the TN area 1, because the frequency F1 and the frequency F2 exist in the TN area 1, the terminal device may measure only the frequency F1 and the frequency F2, and does not need to measure the frequency F3. When the terminal device is in an area range of the TN area 3, because the frequency F3 and the frequency F4 exist in the TN area 3, the terminal device may measure only the frequency F3 and the frequency F4, and does not measure the frequency F1 and the frequency F2.

Optionally, the information about the area associated with the frequency may be carried in the third message (that is, the third message carries the GAP configuration and the information about the area associated with the frequency corresponding to the GAP configuration). Alternatively, the information about the area associated with the frequency may be carried in a message different from the third message, for example, may be carried in a system message or dedicated signaling.

After receiving the information about the area associated with the frequency, the terminal device may determine, based on a location of the terminal device, whether the terminal device is located in the area associated with the frequency. If determining that the terminal device is located in the area associated with the frequency, the terminal device may determine that the frequency needs to be measured, and then determine that a GAP corresponding to the frequency needs to be activated. If determining that the terminal device is not located in the area associated with the frequency, the terminal device may determine that the frequency does not need to be measured, and then determine that a GAP corresponding to the frequency does not need to be activated.

Optionally, when the terminal device determines that a GAP does not need to be activated, the network device may schedule uplink and downlink data for the terminal device in a slot corresponding to the GAP.

For example, the third message sent by the first network device includes information about frequencies f1, f2, f3, and f4, and a GAP 1 configuration and a GAP 2 configuration. f1 is associated with a GAP 1, and f2, f3, and f4 are associated with a GAP 2. In addition, the first network device further sends, to the terminal device, information about an area associated with f1, information about an area associated with f2, information about an area associated with f3, and information about an area associated with f4. If the terminal device determines, based on a location of the terminal device, that the terminal device is located in the area associated with f1, the terminal device determines that f1 needs to be measured, and f3, f4, and f5 do not need to be measured. In this case, the GAP 2 associated with f3, f4, and f5 does not need to be used. The third indication information sent by the terminal device to the first network device may indicate to deactivate the GAP 2. Subsequently, if the terminal device moves to the area associated with any one of f2, f3, or f4, the terminal device may further send, to the first network device, the third indication information indicating to activate the GAP 2.

Optionally, the third message may further include other information used by the terminal device to perform measurement, for example, information such as a report configuration and a measurement identifier. For details, refer to information included in an RRC reconfiguration message sent by a source base station to a terminal device in an existing cell handover procedure.

Optionally, the first network device may further send fourth indication information to the terminal device, where the fourth indication information indicates the terminal device to determine, based on the information about the area associated with the frequency, whether to measure the frequency. The fourth indication information may be carried in the third message; or may be carried in a message different from the third message, for example, may be carried in an RRC reconfiguration message different from the third message.

The fourth indication information may be per-frequency (per-frequency). In this case, the fourth indication information may indicate the terminal device to determine, based on area information associated with a frequency and for the frequency delivered in the third message, whether to measure the frequency. Alternatively, the fourth indication information may be per-terminal device (per-UE). In this case, the fourth indication information may indicate the terminal device to determine, based on information about an area associated with each frequency and for the frequency delivered in the third message, whether to measure the frequency.

Optionally, the third indication information may be carried in a medium access control (Medium Access Control, MAC) control element (control element, CE), and is directly sent to a MAC layer of the first network device. The MAC layer of the first network device directly determines, based on the third indication information, whether to activate the GAP. Alternatively, the third indication information may be carried in dedicated signaling. For example, the third indication information may be carried in an RRC message and sent to an RRC layer of the first network device. The RRC layer sends, to a MAC layer, a message indicating to activate the GAP or deactivate the GAP, or the RRC layer indicates the MAC layer to activate the GAP or deactivate the GAP.

Optionally, in the foregoing embodiment, that the third indication information indicates an activated or deactivated GAP may be replaced with that the third indication information indicates the first network device base station to add or delete a GAP. After receiving the third indication information, the first network device may send a fifth message to the terminal device, where the fifth message includes a configuration of the deleted GAP or includes a configuration of the added GAP. Specifically, when the third indication information indicates to deactivate one or more GAPs, the fifth message sent by the first network device may include a configuration of the one or more deleted GAPs. When the third indication information indicates to activate one or more GAPs, the fifth message sent by the first network device may include a configuration of the one or more added GAPs.

Optionally, the third indication information may alternatively indicate a frequency not to be measured by the terminal device or a frequency to be measured by the terminal device, and the first network device updates a GAP configuration based on the frequency not to be measured by the terminal device or the frequency to be measured by the terminal device. For example, a configuration delivered by the first network device includes: measuring a frequency F 1, a frequency F2, and a frequency F3, where the frequency F1 and the frequency F2 correspond to a GAP 1, and the frequency F3 corresponds to a GAP 2. After receiving the configuration, the terminal device determines not to measure the frequency F3, and sends third indication information to the first network device, where the third indication information indicates that the terminal device does not measure the frequency F3. After receiving the third indication information, the first network device may send a fifth message to the terminal device, where the fifth message indicates to delete a configuration of the GAP 2. If the terminal device subsequently sends new third indication information to the first network device, to indicate that the frequency F3 needs to be measured again, the first network device may send a new fifth message to the terminal device, where the fifth message includes the configuration of the GAP 2.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

It may be understood that, in the foregoing embodiments, the methods and/or the steps implemented by the devices may alternatively be implemented by a component (such as a processor, a chip, a chip system, a circuit, a logic module, or software, for example, a chip or a circuit) that can be used in the devices.

The foregoing mainly describes the solutions provided in this application from the perspective of interaction between devices. Correspondingly, this application further provides a communication apparatus, and the communication apparatus is configured to implement the foregoing methods. The communication apparatus may be the first network device, the terminal device, the network device corresponding to the candidate target cell, or the core network device in the foregoing method embodiments, or an apparatus including the foregoing device, or a component that can be used in the foregoing device.

It may be understood that, to implement the foregoing functions, the communication apparatus includes a hardware structure and/or a software module for performing a corresponding function. A person skilled in the art should be easily aware that units, algorithms, and steps in the examples described with reference to embodiments disclosed in this specification can be implemented in a form of hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division during actual implementation.

FIG. 17 is a diagram of a structure of a communication apparatus 170. For example, as shown in FIG. 17, the communication apparatus 170 includes a transceiver module 1702 and a processing module 1701. For ease of description, FIG. 17 shows only main components of the communication apparatus.

In some embodiments, the communication apparatus 170 may further include a storage module (not shown in FIG. 17), configured to store program instructions and data.

In some embodiments, the transceiver module 1702 may also be referred to as a transceiver unit, and is configured to implement a sending function and/or a receiving function. The transceiver module 1702 may include a transceiver circuit, a transceiver machine, a transceiver, or a communication interface.

In some embodiments, the transceiver module 1702 may include a receiving module and a sending module, respectively configured to perform receiving steps and sending steps performed by the first network device, the terminal device, the network device corresponding to the candidate target cell, or the core network device in the foregoing method embodiments, and/or another process used to support the technology described in this specification. The processing module 1701 may be configured to perform processing steps (for example, determining and generation) performed by the first network device, the terminal device, the network device corresponding to the candidate target cell, or the core network device in the foregoing method embodiments, and/or another process used to support the technology described in this specification.

When the communication apparatus 170 is configured to implement a function of the first network device:
In a possible design, the transceiver module 1702 is configured to send a handover request message to a plurality of candidate target cells, where the plurality of candidate target cells have same first identification information. The transceiver module 1702 is further configured to receive handover request acknowledgment messages corresponding to the plurality of candidate target cells respectively, where each handover request acknowledgment message includes characteristic information and a handover configuration of the candidate target cell. The transceiver module 1702 is further configured to send a first message to a terminal device, where the first message includes handover configurations and characteristic information that correspond to the plurality of candidate target cells respectively, and the characteristic information is used by the terminal device to select one of the plurality of candidate target cells as a target cell.

Optionally, the transceiver module 1702 is further configured to receive a measurement report from the terminal device, where the measurement report includes the first identification information of the plurality of candidate target cells.

In another possible design, the transceiver module 1702 is configured to send a handover request message to a plurality of candidate target cells, where the plurality of candidate target cells have same first identification information, the handover request message includes location information associated with a terminal device, and the location information associated with the terminal device is used by the candidate target cell to perform admission control on the terminal device. The transceiver module 1702 is further configured to receive a handover request acknowledgment message corresponding to a target cell, where the handover acknowledgment message includes a handover configuration corresponding to the target cell, and the target cell is a candidate target cell that successfully performs admission control on the terminal device in the plurality of candidate target cells. The transceiver module 1702 is further configured to send a first message to the terminal device, where the first message includes the handover configuration corresponding to the target cell, and the first message is used by the terminal device to perform handover to the target cell.

Optionally, the transceiver module 1702 is further configured to receive a measurement report from the terminal device, where the measurement report includes the first identification information of the plurality of candidate target cells.

In another possible design, the processing module 1701 is configured to obtain location information associated with a terminal device and respective area information of a plurality of candidate target cells, where the plurality of candidate target cells have same first identification information. The processing module 1701 is further configured to determine a target cell based on the location information associated with the terminal device and the respective area information of the plurality of candidate target cells, where the target cell belongs to the plurality of candidate target cells, and the terminal device is located in a coverage area of the target cell. The transceiver module 1702 is configured to send a first message to the terminal device, where the first message includes a handover configuration of the target cell, and the first message is used by the terminal device to perform handover to the target cell.

Optionally, that the processing module 1701 obtains the respective area information of the plurality of candidate target cells includes: The processing module 1701 receives the area information of the plurality of candidate target cells through the transceiver module 1702. Alternatively, the processing module 1701 obtains the respective area information of the plurality of candidate target cells from network devices corresponding to the plurality of candidate target cells respectively. Alternatively, the processing module 1701 obtains the respective area information of the plurality of candidate target cells from a network management network element.

Optionally, that the processing module 1701 obtains the location information associated with the terminal device and the respective area information of the plurality of candidate target cells includes: The processing module 1701 obtains a neighboring cell relationship, where the neighboring cell relationship includes first identification information and second identification information of the candidate target cell, and first location information, and the first location information includes area information of the candidate target cell and location information of a terminal device located in a coverage area of the candidate target cell.

Optionally, that the processing module 1701 obtains the neighboring cell relationship includes: The processing module 1701 receives, through the transceiver module 1702, the first identification information and the second identification information of the candidate target cell that are reported by the terminal device, and the location information of the terminal device in the measured candidate target cell. Alternatively, the processing module 1701 receives, through the transceiver module 1702, handover acknowledgment information corresponding to the candidate target cell, where the handover acknowledgment information includes the area information, the first identification information, and/or the second identification information of the candidate target cell. Alternatively, the processing module 1701 receives the neighboring cell relationship from a second network device through the transceiver module 1702.

Optionally, the transceiver module 1702 is further configured to send the neighboring cell relationship to a third network device.

Optionally, the transceiver module 1702 is further configured to receive a measurement report from the terminal device, where the measurement report includes the first identification information of the plurality of candidate target cells.

In another possible design, the transceiver module 1702 is configured to send a third message to a terminal device, where the third message includes one or more measurement gap GAP configurations. The transceiver module 1702 is further configured to receive third indication information from the terminal device, where the third indication information indicates to activate or deactivate one or more of one or more GAPs included in the third message.

Optionally, the transceiver module 1702 is further configured to send information about an area associated with the frequency to the terminal device, where the information about the area associated with the frequency is used by the terminal device to determine, based on whether the terminal device is located in the area associated with the frequency, a frequency to be measured and/or a frequency not to be measured, a GAP associated with the frequency not to be measured is a GAP that the third message indicates to deactivate, and a GAP associated with the frequency to be measured is a GAP that the third message indicates to activate.

Optionally, the transceiver module 1702 is further configured to send fourth indication information to the terminal device, where the fourth indication information indicates the terminal device to determine, based on the information about the area associated with the frequency, whether to measure the frequency.

When the communication apparatus 170 is configured to implement a function of the terminal device:
In a possible design, the transceiver module 1702 is configured to receive a first message from a first network device, where the first message includes handover configurations and characteristic information that correspond to a plurality of candidate target cells respectively, and the plurality of candidate target cells have same first identification information. The processing module 1701 is configured to select one of the plurality of candidate target cells as a target cell based on the characteristic information. The processing module 1701 is further configured to apply a handover configuration of the target cell, to enable the communication apparatus 170 to perform handover to the target cell.

Optionally, the processing module 1701 is further configured to measure second identification information of one or more cells. The processing module 1701 is further configured to compare second identification information of each of the plurality of candidate target cells with the second identification information of the measured cell.

Optionally, the transceiver module 1702 is further configured to send a measurement report to the first network device, where the measurement report includes first identification information of the target cell, and the first identification information of the target cell is the same as the first identification information of the plurality of candidate target cells.

Optionally, the processing module 1701 is further configured to retain, in the first message, handover configurations of candidate target cells other than the target cell.

In another possible design, the transceiver module 1702 is configured to receive a third message from a first network device, where the third message includes one or more measurement gap GAP configurations. The transceiver module 1702 is further configured to send third indication information to the first network device, where the third indication information indicates to activate or deactivate one or more of one or more GAPs included in the third message.

Optionally, the processing module 1701 is configured to obtain information about an area associated with the frequency. The processing module 1701 is further configured to determine, based on the information about the area associated with the frequency, whether a terminal device is located in the area associated with the frequency, and if the terminal device is located in the area associated with the frequency, determine to measure the frequency, or if the terminal device is not located in the area associated with the frequency, determine not to measure the frequency, where a GAP associated with the frequency not to be measured is a GAP that the third message indicates to deactivate, and a GAP associated with the frequency to be measured is a GAP that the third message indicates to activate.

Optionally, the transceiver module 1702 is further configured to receive fourth indication information from the first network device, where the fourth indication information indicates the terminal device to determine, based on the information about the area associated with the frequency, whether to measure the frequency.

When the communication apparatus 170 is configured to implement a function of the network device corresponding to the candidate target cell:
In a possible design, the transceiver module 1702 is configured to receive a handover request message from a first network device, where the handover request message includes location information associated with a terminal device. The processing module 1701 is configured to perform admission control on the terminal device based on the location information associated with the terminal device.

Optionally, that the processing module 1701 performs the admission control on the terminal device includes: determining that the terminal device is located in a coverage area, and successfully performing the admission control; or determining that the terminal device is not located in a coverage area, and failing to perform the admission control.

Optionally, the transceiver module 1702 is further configured to send a handover request acknowledgment message to the first network device, where the handover acknowledgment message includes a handover configuration.

Optionally, the transceiver module 1702 is further configured to send a handover reject message to the first network device.

When the communication apparatus 170 is configured to implement a function of the core network device:

In a possible design, the transceiver module 1702 is configured to receive cell information from a fourth network device, where the cell information includes information about a serving cell of the fourth network device and information about a neighboring cell of the serving cell, the information about the serving cell includes first identification information and second identification information of the serving cell, the information about the neighboring cell includes second identification information of the neighboring cell, the first identification information is used to identify one or more cells, and the second identification information is used to uniquely identify a cell. The transceiver module 1702 is further configured to receive a handover request message from a fifth network device, where the handover request message includes first identification information of a target cell to which a terminal device requests handover and second identification information of a cell measured by the terminal device, and the handover request message is used to request the target cell to prepare a handover resource. The processing module 1701 is configured to determine, based on the cell information and the handover request message, that the first identification information of the target cell is the same as the first identification information of the serving cell, and the second identification information of the cell measured by the terminal device is the same as the second identification information of the serving cell or the neighboring cell. The transceiver module 1702 is further configured to send a second message to the fourth network device, where the second message is used to request the target cell to prepare the handover resource.

Optionally, the handover request message further includes identification information of a sixth network device, and the processing module 1701 is further configured to ignore the identification information of the sixth network device.

In another possible design, the transceiver module 1702 is configured to receive cell information from a seventh network device, where the cell information includes first identification information and area information of a serving cell of the seventh network device. The transceiver module 1702 is further configured to receive a handover request message from an eighth network device, where the handover request message includes first identification information of a target cell to which a terminal device requests handover. The processing module 1701 is configured to determine, based on the cell information and location information of the terminal device, that the first identification information of the serving cell is the same as the first identification information of the target cell and the terminal device is located in a coverage area of the serving cell. The transceiver module 1702 is configured to send a second message to the seventh network device, where the second message is used to request the target cell to prepare a handover resource.

Optionally, the handover request message further includes identification information of a ninth network device, and the processing module 1701 is further configured to ignore the identification information of the ninth network device.

Optionally, that the processing module 1701 obtains the location information of the terminal device includes: The processing module 1701 receives the location information of the terminal device from the terminal device through the transceiver module 1702. Alternatively, the handover request message includes the location information of the terminal device.

All related content of the steps in the foregoing method embodiments may be cited in function descriptions of the corresponding functional modules. Details are not described herein again.

In this application, the communication apparatus 170 is presented in a form of functional modules obtained through division in an integrated manner. The "module" herein may be an application-specific integrated circuit (application-specific integrated circuit, ASIC), a circuit, a processor and a memory that execute one or more software or firmware programs, an integrated logic circuit, and/or another component that can provide the foregoing function.

In some embodiments, when the communication apparatus 170 in FIG. 17 is a chip or a chip system, a function/implementation process of the transceiver module 1702 may be implemented by an input/output interface (or a communication interface) of the chip or the chip system, and a function/implementation process of the processing module 1701 may be implemented by a processor (or a processing circuit) of the chip or the chip system.

The communication apparatus 170 provided in this embodiment may perform the foregoing methods. Therefore, for technical effects that can be achieved by the communication apparatus 170, refer to the foregoing method embodiments. Details are not described herein again.

In a possible product form, the communication apparatus 170 may be implemented by using the following: one or more field programmable gate arrays (field programmable gate array, FPGA), a programmable logic device (programmable logic device, PLD), a controller, a state machine, gate logic, a discrete hardware component, any other suitable circuit, or any combination of circuits that can perform various functions described throughout this application.

It should be noted that the structure shown in FIG. 17 does not constitute a specific limitation on a device structure. For example, in some other embodiments of this application, the devices may include more or fewer components than those shown in the figure, or may combine some components, or may split some components, or may have different component arrangements. The components shown in the figure may be implemented by hardware, software, or a combination of software and hardware.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke instructions in the computer program stored in the memory, to instruct the communication apparatus to perform the method in any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and transmit the computer-executable instructions to the processor.

In still another possible implementation, the communication apparatus further includes a communication interface, and the communication interface is configured to communicate with a module outside the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

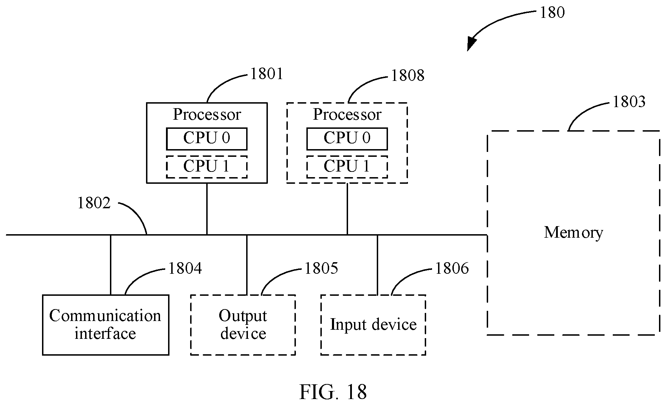

For example, the communication apparatus may have a structure of a communication apparatus 180 shown in FIG. 18. As shown in FIG. 18, the communication apparatus 180 includes a processor 1801, a communication line 1802, and at least one communication interface (where FIG. 18 is described merely by using an example in which a communication interface 1804 is included). Optionally, the communication apparatus 180 may further include a memory 1803.

The processor 1801 may be a general-purpose central processing unit (central processing unit, CPU), a microprocessor, an ASIC, or one or more integrated circuits for controlling program execution of the solutions of this application.

The communication line 1802 may include a path for transmitting information between the foregoing components.

The communication interface 1804 is configured to communicate with another device or a communication network by using any transceiver-type apparatus, for example, the Ethernet, a radio access network, or a wireless local area network (wireless local area network, WLAN).

The memory 1803 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, this is not limited thereto. The memory may exist independently, and is connected to the processor through the communication line 1802. Alternatively, the memory may be integrated with the processor.

The memory 1803 is configured to store computer-executable instructions for executing the solutions in this application, and the processor 1801 controls the execution. The processor 1801 is configured to execute the computer-executable instructions stored in the memory 1803, to implement the methods provided in the foregoing embodiments of this application.

Optionally, the computer-executable instructions in embodiments of this application may also be referred to as application program code or computer program code. This is not specifically limited in embodiments of this application.

During specific implementation, in an embodiment, the processor 1801 may include one or more CPUs, for example, a CPU 0 and a CPU 1 in FIG. 18.

During specific implementation, in an embodiment, the communication apparatus 120 may include a plurality of processors such as the processor 1801 and a processor 1808 in FIG. 18. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the communication apparatus 180 may further include an output device 1805 and an input device 1806. The output device 1805 communicates with the processor 1801, and may display information in a plurality of manners. For example, the output device 1805 may be a liquid crystal display (liquid crystal display, LCD), a light emitting diode (light emitting diode, LED) display device, a cathode ray tube (cathode ray tube, CRT) display device, or a projector (projector). The input device 1806 communicates with the processor 1801, and may receive an input from a user in a plurality of manners. For example, the input device 1806 may be a mouse, a keyboard, a touchscreen device, or a sensing device.

It may be understood that the structure shown in FIG. 18 does not constitute a specific limitation on the communication apparatus 180. For example, in some other embodiments of this application, the communication apparatus 180 may include more or fewer components than those shown in the figure, or may combine some components, or may split some components, or may have different component arrangements. The components shown in the figure may be implemented by hardware, software, or a combination of software and hardware.

The communication apparatus 180 provided in this embodiment may perform the foregoing communication method. Therefore, for technical effects that can be achieved by the communication apparatus 180, refer to the foregoing method embodiments. Details are not described herein again.

In a simple embodiment, a person skilled in the art may figure out that the communication apparatus 170 may be in a form of the communication apparatus 180 shown in FIG. 18.

Specifically, functions/implementation processes of the transceiver module 1702 and the processing module 1701 in FIG. 17 may be implemented by the processor 1801 shown in FIG. 18 by invoking the computer-executable instructions stored in the memory 1803. Alternatively, a function/implementation process of the processing module 1701 in FIG. 17 may be implemented by the processor 1801 shown in FIG. 18 by invoking the computer-executable instructions stored in the memory 1803, and a function/implementation process of the transceiver module 1702 in FIG. 17 may be implemented by the communication interface 1804 shown in FIG. 18.

This application further provides a computer-readable storage medium. The computer-readable storage medium stores a computer program or instructions. When the computer program or the instructions are executed by a computer, functions in any one of the foregoing method embodiments are implemented.

This application further provides a computer program product. When the computer program product is executed by a computer, functions in any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiment. Details are not described herein again.

It may be understood that the system, apparatuses, and methods described in this application may alternatively be implemented in another manner. For example, the described apparatus embodiments are merely examples. For example, division into the units is merely logical function division, and may be other division during actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The units described as separate parts may or may not be physically separate, this is, may be located in one position, or may be distributed on a plurality of network units. Parts displayed as units may or may not be physical units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When a software program is used to implement embodiments, all or some of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable media accessible to a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of a plurality of. A single processor or another unit may implement several functions enumerated in the claims. Some measures are set forth in dependent claims that are different from each other, but this does not mean that these measures cannot be combined to produce a great effect.

Although this application is described with reference to specific features and embodiments thereof, it is clear that various modifications and combinations may be made to them without departing from the spirit and scope of this application. Correspondingly, the specification and accompanying drawings are merely example description of this application defined by the accompanying claims, and are considered as any of or all modifications, variations, combinations or equivalents that cover the scope of this application. It is clear that a person skilled in the art can make various modifications and variations to this application without departing from the spirit and scope of this application. In this case, this application is intended to cover these modifications and variations of this application provided that they fall within the scope of protection defined by the following claims and their equivalent technologies.

## Claims

1. A communication method, wherein the method comprises:
sending a handover request message to a plurality of candidate target cells, wherein the plurality of candidate target cells have same first identification information;
receiving handover request acknowledgment messages corresponding to the plurality of candidate target cells respectively, wherein each handover request acknowledgment message comprises characteristic information and a handover configuration of the candidate target cell; and
sending a first message to a terminal device, wherein the first message comprises handover configurations and characteristic information that correspond to the plurality of candidate target cells respectively, and the characteristic information is used by the terminal device to select one of the plurality of candidate target cells as a target cell.

2. The method according to claim 1, wherein the handover request message comprises first indication information, and the first indication information indicates the candidate target cell to feed back the characteristic information.

3. The method according to claim 1 or 2, wherein the first message comprises second indication information, and the second indication information indicates the terminal device to determine the target cell from the plurality of candidate target cells.

4. The method according to any one of claims 1 to 3, wherein the characteristic information is second identification information or area information, and the second identification information is used to uniquely identify a cell.

5. The method according to any one of claims 1 to 4, wherein the method further comprises:
receiving a measurement report from the terminal device, wherein the measurement report comprises the first identification information of the plurality of candidate target cells.

6. The method according to any one of claims 1 to 5, wherein the plurality of candidate target cells have a same frequency.

7. A communication method, wherein the method comprises:
receiving a first message from a first network device, wherein the first message comprises handover configurations and characteristic information that correspond to a plurality of candidate target cells respectively, and the plurality of candidate target cells have same first identification information;
selecting one of the plurality of candidate target cells as a target cell based on the characteristic information; and
applying a handover configuration of the target cell to perform handover to the target cell.

8. The method according to claim 7, wherein the characteristic information comprises second identification information or area information, and the second identification information is used to uniquely identify a cell; and
second identification information of the target cell is the same as second identification information of any measured cell, or a terminal device is located in an area indicated by area information corresponding to the target cell.

9. The method according to claim 8, wherein when the characteristic information comprises the second identification information, the method further comprises:
measuring second identification information of one or more cells; and
comparing second identification information of each of the plurality of candidate target cells with the second identification information of the measured cell.

10. The method according to any one of claims 7 to 9, wherein the method further comprises:
sending a measurement report to the first network device, wherein the measurement report comprises first identification information of the target cell, and the first identification information of the target cell is the same as the first identification information of the plurality of candidate target cells.

11. The method according to any one of claims 7 to 10, wherein the method further comprises:
retaining, in the first message, handover configurations of candidate target cells other than the target cell.

12. The method according to any one of claims 7 to 11, wherein the first message further comprises second indication information, and the second indication information indicates the terminal device to determine the target cell from the plurality of candidate target cells.

13. The method according to any one of claims 7 to 12, wherein the plurality of candidate target cells have a same frequency.

14. A communication method, wherein the method comprises:
sending a handover request message to a plurality of candidate target cells, wherein the plurality of candidate target cells have same first identification information, the handover request message comprises location information associated with a terminal device, and the location information associated with the terminal device is used by the candidate target cell to perform admission control on the terminal device;
receiving a handover request acknowledgment message corresponding to a target cell, wherein the handover acknowledgment message comprises a handover configuration corresponding to the target cell, and the target cell is a candidate target cell that successfully performs admission control on the terminal device in the plurality of candidate target cells; and
sending a first message to the terminal device, wherein the first message comprises the handover configuration corresponding to the target cell, and the first message is used by the terminal device to perform handover to the target cell.

15. The method according to claim 14, wherein that the admission control succeeds comprises:
determining that the terminal device is located in a coverage area of the candidate target cell; and
that the admission control fails comprises: determining that the terminal device is not located in a coverage area of the candidate target cell.

16. The method according to claim 14 or 15, wherein the location information associated with the terminal device comprises at least one of the following: area information of a beam in which the terminal device is located, location information of the terminal device, and information about a geographical area in which the terminal device is located.

17. The method according to any one of claims 14 to 16, wherein the method further comprises:
receiving a measurement report from the terminal device, wherein the measurement report comprises the first identification information of the plurality of candidate target cells.

18. The method according to any one of claims 14 to 17, wherein the plurality of candidate target cells have a same frequency.

19. A communication method, wherein the method comprises:
receiving a handover request message from a first network device, wherein the handover request message comprises location information associated with a terminal device; and
performing admission control on the terminal device based on the location information associated with the terminal device.

20. The method according to claim 19, wherein the performing the admission control on the terminal device comprises:
determining that the terminal device is located in a coverage area, and successfully performing the admission control; or
determining that the terminal device is not located in a coverage area, and failing to perform the admission control.

21. The method according to claim 19 or 20, wherein after the successfully performing the admission control, the method further comprises:
sending a handover request acknowledgment message to the first network device, wherein the handover acknowledgment message comprises a handover configuration.

22. The method according to claim 19 or 20, wherein the admission control fails, and the method further comprises:
sending a handover reject message to the first network device.

23. The method according to any one of claims 19 to 22, wherein the location information associated with the terminal device comprises at least one of the following: area information of a beam in which the terminal device is located, location information of the terminal device, and information about a geographical area in which the terminal device is located.

24. A communication method, wherein the method comprises:
obtaining location information associated with a terminal device and respective area information of a plurality of candidate target cells, wherein the plurality of candidate target cells have same first identification information;
determining a target cell based on the location information associated with the terminal device and the respective area information of the plurality of candidate target cells, wherein the target cell belongs to the plurality of candidate target cells, and the terminal device is located in a coverage area of the target cell; and
sending a first message to the terminal device, wherein the first message comprises a handover configuration of the target cell, and the first message is used by the terminal device to perform handover to the target cell.

25. The method according to claim 24, wherein the obtaining the respective area information of the plurality of candidate target cells comprises:
receiving the area information of the plurality of candidate target cells;
obtaining the respective area information of the plurality of candidate target cells from network devices corresponding to the plurality of candidate target cells respectively; or
obtaining the respective area information of the plurality of candidate target cells from a network management network element.

26. The method according to claim 24 or 25, wherein the obtaining the location information associated with the terminal device and the respective area information of the plurality of candidate target cells comprises:
obtaining a neighboring cell relationship, wherein the neighboring cell relationship comprises first identification information and second identification information of the candidate target cell, and first location information, and the first location information comprises area information of the candidate target cell and location information of a terminal device located in a coverage area of the candidate target cell.

27. The method according to claim 26, wherein the obtaining the neighboring cell relationship comprises:
receiving the first identification information and the second identification information of the candidate target cell that are reported by the terminal device, and the location information of the terminal device in the measured candidate target cell;
receiving handover acknowledgment information corresponding to the candidate target cell, wherein the handover acknowledgment information comprises the area information, the first identification information, and/or the second identification information of the candidate target cell; or
receiving the neighboring cell relationship from a second network device.

28. The method according to claim 26 or 27, wherein the method further comprises:
sending the neighboring cell relationship to a third network device.

29. The method according to any one of claims 24 to 28, wherein the location information associated with the terminal device comprises at least one of the following: area information of a beam in which the terminal device is located, location information of the terminal device, and information about a geographical area in which the terminal device is located.

30. The method according to any one of claims 24 to 29, wherein the method further comprises:
receiving a measurement report from the terminal device, wherein the measurement report comprises the first identification information of the plurality of candidate target cells.

31. The method according to any one of claims 24 to 30, wherein the plurality of candidate target cells have a same frequency.

32. A communication method, wherein the method comprises:
receiving cell information from a fourth network device, wherein the cell information comprises information about a serving cell of the fourth network device and information about a neighboring cell of the serving cell, the information about the serving cell comprises first identification information and second identification information of the serving cell, the information about the neighboring cell comprises second identification information of the neighboring cell, the first identification information is used to identify one or more cells, and the second identification information is used to uniquely identify a cell;
receiving a handover request message from a fifth network device, wherein the handover request message comprises first identification information of a target cell to which a terminal device requests handover and second identification information of a cell measured by the terminal device, and the handover request message is used to request the target cell to prepare a handover resource;
determining, based on the cell information and the handover request message, that the first identification information of the target cell is the same as the first identification information of the serving cell, and the second identification information of the cell measured by the terminal device is the same as the second identification information of the serving cell or the neighboring cell; and
sending a second message to the fourth network device, wherein the second message is used to request the target cell to prepare the handover resource.

33. The method according to claim 32, wherein the handover request message further comprises identification information of a sixth network device; and
the method further comprises:
ignoring the identification information of the sixth network device.

34. The method according to claim 32 or 33, wherein the information about the serving cell further comprises at least one of frequency information of the serving cell, first identification information of the neighboring cell, and frequency information of the neighboring cell.

35. The method according to any one of claims 32 to 34, wherein a frequency of the serving cell is the same as a frequency of the target cell.

36. A communication method, wherein the method comprises:
receiving cell information from a seventh network device, wherein the cell information comprises first identification information and area information of a serving cell of the seventh network device;
receiving a handover request message from an eighth network device, wherein the handover request message comprises first identification information of a target cell to which a terminal device requests handover;
determining, based on the cell information and location information of the terminal device, that the first identification information of the serving cell is the same as the first identification information of the target cell and the terminal device is located in a coverage area of the serving cell; and
sending a second message to the seventh network device, wherein the second message is used to request the target cell to prepare a handover resource.

37. The method according to claim 36, wherein the handover request message further comprises identification information of a ninth network device; and
the method further comprises:
ignoring the identification information of the ninth network device.

38. The method according to claim 36 or 37, wherein the obtaining the location information of the terminal device comprises:
receiving the location information of the terminal device from the terminal device; or
the handover request message comprises the location information of the terminal device.

39. The method according to any one of claims 36 to 38, wherein the cell information further comprises at least one of frequency information of the serving cell, first identification information of a neighboring cell of the serving cell, second identification information of the neighboring cell, and frequency information of the neighboring cell.

40. The method according to any one of claims 36 to 39, wherein a frequency of the serving cell is the same as a frequency of the target cell.

41. A communication method, wherein the method comprises:
sending a third message to a terminal device, wherein the third message comprises one or more measurement gap GAP configurations; and
receiving third indication information from the terminal device, wherein the third indication information indicates to activate or deactivate one or more of the one or more GAPs.

42. The method according to claim 41, wherein the third message further comprises information about one or more frequencies associated with the one or more GAP configurations, and the one or more frequencies are frequencies configured for the terminal device to perform measurement.

43. The method according to claim 42, wherein the method further comprises:
sending information about an area associated with the frequency to the terminal device, wherein the information about the area associated with the frequency is used by the terminal device to determine, based on whether the terminal device is located in the area associated with the frequency, a frequency to be measured and/or a frequency not to be measured, a GAP associated with the frequency not to be measured is a GAP that the third message indicates to deactivate, and a GAP associated with the frequency to be measured is a GAP that the third message indicates to activate.

44. The method according to claim 43, wherein the method further comprises:
sending fourth indication information to the terminal device, wherein the fourth indication information indicates the terminal device to determine, based on the information about the area associated with the frequency, whether to measure the frequency.

45. The method according to any one of claims 41 to 44, wherein
the third indication information is carried in a medium access control control element MAC CE or a radio resource control RRC message.

46. A communication method, wherein the method comprises:
receiving a third message from a first network device, wherein the third message comprises one or more measurement gap GAP configurations; and
sending third indication information to the first network device, wherein the third indication information indicates to activate or deactivate one or more of the one or more GAPs.

47. The method according to claim 46, wherein a second message further comprises information about one or more frequencies associated with the one or more GAP configurations, and the one or more frequencies are frequencies configured for the terminal device to perform measurement.

48. The method according to claim 47, wherein the method further comprises:
obtaining information about an area associated with the frequency; and
determining, based on the information about the area associated with the frequency, whether the terminal device is located in the area associated with the frequency, and if the terminal device is located in the area associated with the frequency, determining to measure the frequency, or if the terminal device is not located in the area associated with the frequency, determining not to measure the frequency, wherein
a GAP associated with the frequency not to be measured is a GAP that the third message indicates to deactivate, and a GAP associated with the frequency to be measured is a GAP that the third message indicates to activate.

49. The method according to claim 48, wherein the method further comprises:
receiving fourth indication information from the first network device, wherein the fourth indication information indicates the terminal device to determine, based on the information about the area associated with the frequency, whether to measure the frequency.

50. The method according to any one of claims 46 to 49, wherein
the third indication information is carried in a medium access control control element MAC CE or a radio resource control RRC message.

51. A communication apparatus, wherein the apparatus comprises a module configured to perform the method according to any one of claims 1 to 50.

52. A communication apparatus, wherein the communication apparatus comprises a processor and a memory, the memory is configured to store computer instructions; and when the processor executes the instructions, the communication apparatus is enabled to perform the method according to any one of claims 1 to 50.

53. A computer-readable storage medium, wherein the computer-readable storage medium comprises a computer program or instructions, and when the computer program or the instructions are run on a computer, the method according to any one of claims 1 to 50 is performed.

54. A computer program product, wherein the computer program product comprises instructions, and when the instructions are run on a computer, the method according to any one of claims 1 to 50 is performed.

55. A chip, wherein the chip comprises a processor, and the processor is configured to run instructions, to enable an apparatus comprising the chip to perform the method according to any one of claims 1 to 50.
